(19) **Europäisches Patentamt / European Patent Office / Office européen des brevets**

(11) **EP 3 050 298 B1**

(12) **FASCICULE DE BREVET EUROPEEN**

(45) Date de publication et mention de la délivrance du brevet:
**21.07.2021 Bulletin 2021/29**

(21) Numéro de dépôt: **14790199.5**

(22) Date de dépôt: **23.09.2014**

(51) Int Cl.:
**H04N 19/51** *(2014.01)*  **H04N 19/52** *(2014.01)*
**H04N 19/597** *(2014.01)*

(86) Numéro de dépôt international:
**PCT/FR2014/052378**

(87) Numéro de publication internationale:
**WO 2015/044581 (02.04.2015 Gazette 2015/13)**

(54) **CODAGE ET DÉCODAGE VIDÉO PAR HÉRITAGE D'UN CHAMP DE VECTEURS DE MOUVEMENT**

VIDEOCODIERUNG UND -DECODIERUNG DURCH VERERBUNG EINES FELDES VON BEWEGUNGSVEKTOREN

VIDEO ENCODING AND DECODING BY INHERITANCE OF A FIELD OF MOTION VECTORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2013 FR 1359328**

(43) Date de publication de la demande:
**03.08.2016 Bulletin 2016/31**

(73) Titulaire: **ORANGE**
**75015 Paris (FR)**

(72) Inventeurs:
- **MORA, Elie Gabriel**
  **75004 Paris (FR)**
- **JUNG, Joël**
  **78320 Le Mesnil Saint Denis (FR)**
- **PESQUET-POPESCU, Béatrice**
  **77700 Bailly Romainvilliers (FR)**
- **CAGNAZZO, Marco**
  **91190 Gif sur Yvette (FR)**

(56) Documents cités:
**WO-A1-2012/096164**

- **JUNGDONG SEO ET AL: "Motion information sharing mode for depth video coding", 3DTV-CONFERENCE: THE TRUE VISION - CAPTURE, TRANSMISSION AND DISPLAY OF 3D VIDEO (3DTV-CON), 2010, IEEE, PISCATAWAY, NJ, USA, 7 juin 2010 (2010-06-07), pages 1-4, XP031706528, ISBN: 978-1-4244-6377-0**
- **JIANGBO LU ET AL: "An Epipolar Geometry-Based Fast Disparity Estimation Algorithm for Multiview Image and Video Coding", IEEE TRANSACTIONS ON CIRCUITS AND SYSTEMS FOR VIDEO TECHNOLOGY, IEEE SERVICE CENTER, PISCATAWAY, NJ, US, vol. 17, no. 6, 1 juin 2007 (2007-06-01), pages 737-750, XP011182751, ISSN: 1051-8215, DOI: 10.1109/TCSVT.2007.896659**
- **HADIZADEH H ET AL: "Rate-Distortion Optimized Pixel-Based Motion Vector Concatenation for Reference Picture Selection", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 21, no. 8, 1 August 2011 (2011-08-01) , pages 1139-1151, XP011480335, ISSN: 1051-8215, DOI: 10.1109/TCSVT.2011.2138770**
- **GONG ET AL: "Real-time joint disparity and disparity flow estimation on programmable graphics hardware", COMPUTER VISION AND IMAGE UNDERSTANDING, ACADEMIC PRESS, US, vol. 113, no. 1 1 January 2009 (2009-01-01), pages 90-100, XP025692173, ISSN: 1077-3142, DOI: 10.1016/J.CVIU.2008.07.007 [retrieved on 2008-08-05]**

**Description**

Domaine de l'invention

La présente invention se rapporte de manière générale au domaine du traitement d'images et plus précisément au codage et au décodage d'images numériques et de séquences d'images numériques.
Le codage/décodage d'images numériques s'applique notamment à des images issues d'au moins une séquence vidéo comprenant :

- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D),
- etc...

La présente invention s'applique de manière similaire au codage/décodage d'images de type 2D ou 3D.
Elle concerne en particulier, mais non exclusivement, des applications de vidéo 3D qui mettent en œuvre un codage/décodage d'images issues de différentes caméras.
L'invention peut notamment, mais non exclusivement, s'appliquer au codage vidéo mis en œuvre dans les codeurs vidéo actuels AVC et HEVC et leurs extensions (MVC, 3D-AVC, MV-HEVC, 3D-HEVC, etc), et au décodage correspondant.

Arrière-plan de l'invention

La norme HEVC est similaire à la norme précédente H.264, en ce sens qu'elle peut utiliser une représentation par blocs de la séquence vidéo.
De façon similaire à la norme H.264, la norme HEVC précitée met en œuvre :

- une prédiction intra qui consiste à prédire des pixels d'une image courante par rapport à des pixels déjà codés puis décodés de cette image courante,
- une prédiction inter qui consiste à prédire le mouvement ou les pixels d'une image courante par rapport à une ou plusieurs images de la séquence qui ont déjà été codées, puis décodées. De telles images sont appelées classiquement images de référence et sont conservées en mémoire aussi bien au codeur qu'au décodeur.

Plus précisément, les images sont découpées en blocs de pixels appelés CTU (abréviation anglaise de « Coded Treeblocks Unit») qui sont similaires aux macroblocs de la norme H.264. Ces blocs CTU peuvent être ensuite subdivisés en blocs plus petits appelés CU (abréviation anglaise de « Coding Unit »), chacun de ces blocs CU ou chaque bloc CTU étant codé par prédiction intra ou inter images.
Classiquement, le codage d'un bloc courant est réalisé à l'aide d'une prédiction du mouvement ou des pixels du bloc courant, délivrant un bloc prédicteur ou bien un ou plusieurs vecteurs de mouvement prédicteurs, et d'un résidu de prédiction, correspondant respectivement à une différence entre le bloc courant et le bloc prédicteur ou entre le mouvement du bloc courant et le mouvement prédicteur. Ce résidu de prédiction est transmis au décodeur qui reconstruit le bloc ou les vecteurs de mouvement courants en ajoutant ce résiduel à la prédiction.
Dans la norme HEVC par exemple, lorsqu'un bloc CTU est découpé en blocs CU, un flux de données, correspondant à chaque bloc CU, est transmis au décodeur. Un tel flux comprend :

- des données résiduelles qui sont les coefficients des blocs CU résiduels quantifiés et éventuellement, lors d'un codage en mode Inter, des données résiduelles des vecteurs de mouvement,
- des paramètres de codage qui sont représentatifs du mode de codage utilisé, en particulier:

  • le mode de prédiction (prédiction intra, prédiction inter, prédiction skip réalisant une prédiction pour laquelle aucune information n'est transmise au décodeur (« en anglais « skip »)) ;
  • des informations précisant le type de prédiction (orientation, image de référence, ...) ;
  • le type de subdivision ;
  • le type de transformée, par exemple DCT 4x4, DCT 8x8, etc...
  • etc..

La prédiction inter d'un bloc courant consiste à prédire certaines informations de codage associées à ce bloc courant, telles que par exemple :

- le vecteur de mouvement temporel du bloc courant par rapport à un vecteur de mouvement temporel associé à un bloc de pixels de référence,
- les pixels du bloc courant par rapport aux pixels d'un bloc de pixels de référence, lequel est situé dans une autre image que l'image courante à laquelle appartient le bloc courant.

Dans le cas de la vidéo de type 2D, cette autre image est par exemple une image située à un instant précédent l'instant courant auquel est située l'image courante.

Dans le cas de la vidéo de type 3D où l'image courante est considérée dans une vue donnée, cette autre image peut appartenir par exemple à une autre vue que la vue donnée. Ladite autre vue est située par exemple au même instant que ladite vue donnée et représente la même scène que la vue donnée, mais d'un autre point de vue.

Dans le cas de la vidéo de type 3D où l'image courante est considérée comme une composante de texture et qu'une prédiction de mouvement de l'image courante est mise en œuvre par rapport à un vecteur de mouvement déterminé dans une autre image que l'image courante, cette autre image est par exemple une composante de profondeur associée à ladite composante de texture, le bloc courant et le bloc de référence ayant des positions identiques respectivement dans la composante de texture et dans la composante de profondeur.

S'agissant de la prédiction d'informations de codage telles qu'un vecteur de mouvement temporel, il est proposé dans le standard HEVC le mode AMVP (pour « Advanced Motion Vector Prédiction » en anglais) qui introduit une liste de vecteurs de mouvement temporels candidats pour prédire le vecteur de mouvement temporel du bloc courant. Seuls la différence (résiduel) entre le vecteur de mouvement du bloc courant et le meilleur vecteur de mouvement temporel candidat de la liste au sens d'un critère de débit-distorsion, et un indice signalant la position de ce meilleur vecteur candidat dans la liste, sont transmis au décodeur, réduisant ainsi le coût de transmission des informations liées au vecteur de mouvement temporel du bloc courant.

La prédiction dans le mode AMVP n'est pas très précise car tous les vecteurs d'un bloc courant sont prédits à l'aide d'un unique vecteur de mouvement prédicteur. Par ailleurs, le fait de transmettre les résiduels de vecteurs de mouvement obtenus dans le flux de données à destination du décodeur est coûteux en termes de débit. Il en résulte que les performances du codage vidéo selon ce mode ne sont pas optimisées.

Le standard HEVC propose également le mode MERGE qui évite de prédire une information de codage d'un bloc courant, telle que par exemple un vecteur de mouvement temporel ou un vecteur de mouvement de disparité. On rappelle ici qu'un vecteur de mouvement de disparité est un vecteur de mouvement utilisé dans le cadre d'une prédiction inter-vues (« Interview Prédiction » en anglais), en vidéo de type 3D. Il s'agit d'un vecteur de mouvement qui décrit le mouvement entre le bloc courant d'une vue dépendante courante et un bloc correspondant à ce bloc courant dans une vue de référence précédemment codée puis décodée, la vue dépendante courante et la vue de base étant chacune représentatives d'une même scène au même instant.

Plus précisément, le mode MERGE permet au bloc courant d'hériter directement des paramètres de mouvement, composés d'un indice de l'image de référence et d'un vecteur de mouvement temporel ou bien d'un vecteur de mouvement de disparité d'un bloc voisin du bloc courant choisi dans une liste de candidats. Le vecteur de mouvement du bloc courant ainsi choisi par héritage dans la liste de vecteurs candidats ne nécessite alors pas d'être codé dans la mesure où le même principe peut être appliqué lors du décodage. Dans un tel cas, seul est transmis dans le flux de données codées l'indice du candidat qui a été choisi et éventuellement des résidus de prédiction

S'agissant du décodage 2D ou 3D, il est fait image par image, et pour chaque image, bloc CTU par bloc CTU. Pour chaque bloc CU d'un bloc CTU, les éléments correspondants du flux sont lus. La quantification inverse et la transformation inverse des coefficients des blocs CU sont effectuées. Puis, la prédiction de chaque bloc CU est calculée et chaque bloc CU est reconstruit en ajoutant le prédicteur au résidu de prédiction décodé.

Le document WO2012096164 A1 décrit le codage d'images multi-vues en utilisant un vecteur de disparité.

Le codage intra ou inter par compétition, tel que mis en œuvre dans la norme HEVC, repose ainsi sur la mise en compétition de différents paramètres de codage, tels que ceux précités, dans le but de sélectionner le meilleur mode de codage, c'est-à-dire celui qui optimisera le codage du bloc considéré selon un critère de performance prédéterminé, par exemple le coût débit/distorsion bien connu de l'homme du métier.

Par ailleurs, dans le domaine de la compression vidéo, de l'indexation vidéo ou de la détection d'objets par exemple, le flot optique est une technique d'estimation de mouvement qui produit un champ dense de vecteurs de mouvement associé à une image courante.

Dans des applications de compression vidéo, le flot optique permet de produire un champ dense de vecteurs de mouvement associé à une image courante à coder et, plus particulièrement, à chaque bloc courant à coder, lorsque l'image courante est partitionnée en blocs. Plus précisément, pour chaque pixel du bloc courant à coder est calculé un vecteur de mouvement qui pointe sur une image de référence déjà codée puis décodée. Le champ de ces vecteurs de mouvement ainsi calculé est dit dense car les pixels de l'image de référence pointés par ces vecteurs de mouvement ne sont pas obligatoirement contigus. Une telle technique diffère des techniques classiques de « *block matching* » qui sont couramment présentes dans la plupart des standards de codage vidéo, et qui, pour un bloc courant à coder, calculent un unique vecteur de mouvement décrivant le mouvement entre le bloc courant à coder et un bloc de référence déjà codé puis décodé. Ledit bloc de référence est choisi comme minimisant un critère de performance de codage, tel que par exemple le critère de distorsion bien connu de l'Homme du métier.

La technique du flot optique permet d'obtenir une prédiction Inter plus précise des blocs d'une image. Toutefois, chaque vecteur de mouvement appartenant au champ de vecteurs de mouvement dense est nécessairement transmis au décodeur, ce qui augmente sensiblement le coût de signalisation et, de ce fait, compense tous les gains potentiels qu'on peut espérer obtenir avec cette technique.

Objet et résumé de l'invention

Un des buts de l'invention est de remédier à des inconvénients de l'état de l'art précité. L'invention est définie par les revendications annexées.

Brève description des dessins

D'autres caractéristiques et avantages apparaîtront à la lecture de modes de réalisation préférés décrits en référence aux figures dans lesquelles:

- la figure 1 représente les étapes du procédé de codage selon l'invention,
- la figure 2 représente un mode de réalisation d'un dispositif de codage apte à mettre en œuvre le procédé de codage représenté à la figure 1,
- la figure 3 représente un mode de réalisation d'un dispositif de décodage selon l'invention,
- la figure 4 représente les étapes d'un procédé de décodage apte à être mis en œuvre dans le dispositif de décodage représenté sur la figure 3,
- les figures 5A à 5K représentent des modes de réalisation du procédé de codage et de décodage selon l'invention.

Description détaillée du principe général de la partie codage

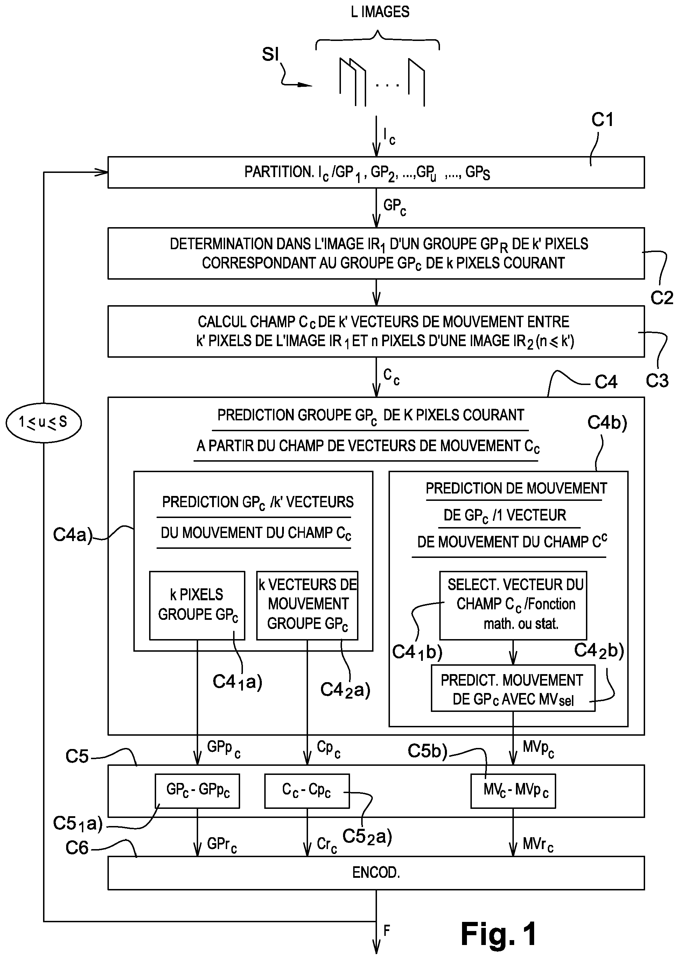

Un mode de réalisation général de l'invention va maintenant être décrit, dans lequel le procédé de codage selon l'invention est utilisé pour coder une image ou une séquence d'images selon un flux binaire proche de celui qu'on obtient par un codage selon la norme HEVC. Dans ce mode de réalisation, le procédé de codage selon l'invention est par exemple implémenté de manière logicielle ou matérielle par modifications d'un codeur initialement conforme à la norme HEVC. Le procédé de codage selon l'invention est représenté sous la forme d'un algorithme comportant des étapes C1 à C6, représentées à la **figure 1.**

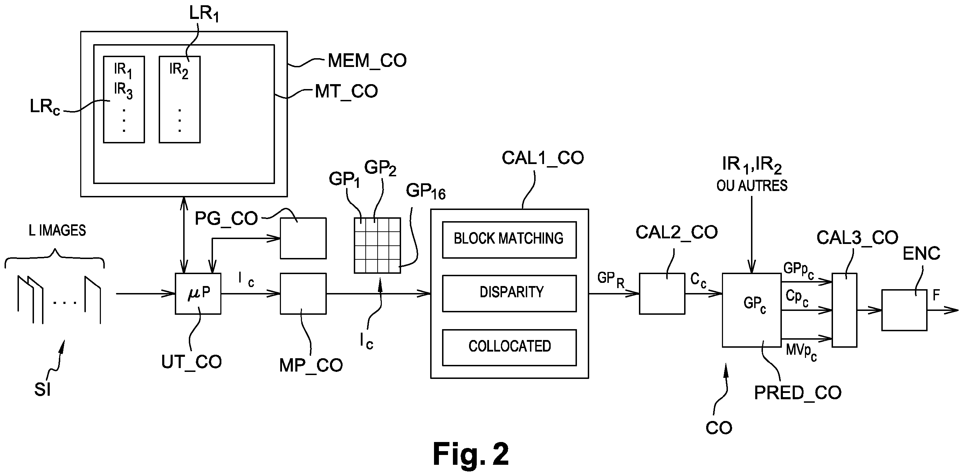

Selon le mode de réalisation de l'invention, le procédé de codage selon l'invention est implémenté dans un dispositif de codage CO représenté à la **figure 2.**

Comme illustré en **figure 2,** un tel dispositif de codage comprend une mémoire MEM_CO comprenant une mémoire tampon MT_CO, une unité de traitement UT_CO équipée par exemple d'un microprocesseur $\mu$P et pilotée par un programme d'ordinateur PG_CO qui met en œuvre le procédé de codage selon l'invention. A l'initialisation, les instructions de code du programme d'ordinateur PG_CO sont par exemple chargées dans une mémoire RAM (non représentée) avant d'être exécutées par le processeur de l'unité de traitement UT_CO.

Le procédé de codage représenté sur la **figure 1** s'applique à toute image courante $I_C$ d'une séquence SI de L images à coder ($L \geq 1$).

A cet effet, une image courante $I_C$ est considérée dans la séquence d'images SI.

Dans le cas où le codage vidéo est de type 2D, l'image courante $I_C$ est en deux dimensions et est issue d'une même caméra.

Dans le cas où le codage vidéo est de type 3D :

- l'image courante $I_C$ est une vue considérée parmi plusieurs vues représentant une même scène au même instant et issues chacune de différentes caméras orientées selon des points de vue différents,
- l'image courante $I_C$ est une composante de texture ou une composante de profondeur,
- etc...

Au cours d'une première étape C1 représentée sur la **figure 1**, il est procédé au partitionnement de l'image courante $I_C$ en une pluralité de groupes de pixels $GP_1$, $GP_2$,..., $GP_u$,..., $GP_S$ ($1 \leq u \leq S$). Un tel partitionnement est effectué par un module logiciel de partitionnement MP_CO représenté à la **figure 2,** lequel module est piloté par le microprocesseur $\mu$P de l'unité de traitement UT_CO.

Un tel module de partitionnement utilise par exemple une méthode de choix par compétition exhaustive ou bien encore une méthode de choix à l'aide d'un algorithme avec à-priori. De telles méthodes sont bien connues de l'homme du métier (cf: G.J. Sullivan and T.Wiegand, "Rate-distortion optimization for video compression", IEEE Signal Proc. Mag., pp.74-90, 1998). Elles ne seront donc pas décrites plus avant.

Les différents types d'algorithmes de partitionnement possibles sont regroupés dans une base de données (non représentée) du codeur CO. Ils permettent d'obtenir un découpage de l'image courante en une pluralité de groupes de pixels qui n'ont pas obligatoirement la même taille et/ou la même forme. De tels groupes de pixels peuvent avoir une forme rectangulaire ou carrée, ou bien d'autres formes géométriques, telles que par exemple des formes sensiblement linéaires ou encore des formes tout à fait arbitraires.

De tels groupes de pixels peuvent également correspondre à des zones ou des objets de l'image courante.

Dans l'exemple représenté sur la **figure 2,** l'image courante $I_C$ est par exemple partitionnée en seize groupes de k pixels $GP_1$, $GP_2$,..., $GP_{16}$, avec par exemple k=16. Lesdits groupes de pixels obtenus ont par exemple tous la forme d'un bloc carré et sont tous de même taille.

Au cours d'une étape C2 représentée à la **figure 1**, il est procédé à la détermination, dans une première image $IR_1$ différente de l'image courante $I_C$, d'un groupe $GP_R$ de k' pixels (k'≤k) correspondant à un groupe $GP_C$ de k pixels courant à coder de l'image courante $I_C$.

On suppose que dans l'exemple représenté, k'=k. Par conséquent, les groupes de pixels $GP_C$ et $GP_R$ sont des blocs de seize pixels.

Dans l'exemple représenté, la première image $IR_1$ est une image de la séquence d'images SI qui a déjà été codée puis décodée, ladite première image appartenant à une liste d'images de référence disponibles en vue de la prédiction des pixels ou du mouvement de l'image courante $I_C$. Une telle liste, notée $LR_C$ sur la **figure 2,** est stockée dans la mémoire tampon MT_CO du codeur CO. Dans l'exemple représenté où le codage est de type HEVC, la mémoire tampon MT_CO est une mémoire DPB (de l'anglais « Decoded Picture Buffer »).

Dans l'exemple représenté sur la **figure 2,** ladite étape de détermination est mise en œuvre par un module logiciel de calcul CAL1_CO qui est piloté par le microprocesseur µP de l'unité de traitement UT_CO.

Selon un premier mode de réalisation, dans le cas aussi bien d'un codage vidéo de type 2D ou de type 3D de l'image courante $I_C$, l'étape de détermination C2 consiste à sélectionner dans la première image $IR_1$ un groupe $GP_R$ de k' pixels qui est le plus ressemblant possible du groupe $GP_C$ de k pixels courant :

- soit au moyen d'un critère classique de mise en correspondance de blocs (en anglais « block matching ») réalisée dans le domaine pixel,
- soit en recherchant dans la première image $IR_1$ un bloc $GP_R$ co-localisé (« collocated » en anglais) qui est situé dans la même position que le bloc courant.

Selon un deuxième mode de réalisation, dans le cas uniquement d'un codage 3D de l'image courante $I_C$, l'étape de détermination C2 consiste à déterminer les k' pixels de la première image $IR_1$ soit comme un groupe de pixels pointé par un unique vecteur de disparité entre l'image courante $I_C$ et la première image $IR_1$, soit comme un groupe de k' pixels dont les k' pixels sont pointés respectivement par des vecteurs d'un champ de vecteurs de disparité entre l'image courante $I_C$ et la première image $IR_1$.

Au cours d'une étape C3 représentée à la **figure 1**, il est procédé au calcul d'un champ $C_C$ de k' vecteurs de mouvement entre chacun des k' pixels du groupe de pixels $GP_R$ de la première image $IR_1$ et n pixels (n≤k') d'au moins une deuxième image $IR_2$ différente de l'image courante. La deuxième image $IR_2$ est une image qui a déjà été codée puis décodée et qui appartient par exemple à une liste d'images de référence de la première image $IR_1$. Une telle liste, notée $LR_1$ sur la **figure 2,** est stockée dans la mémoire tampon MT_CO du codeur CO.

A l'issue de l'étape de calcul C3, un champ $C_C$ de vecteurs de mouvement dense est alors obtenu, en ce sens que les n pixels de la deuxième image $IR_2$ qui sont pointés par les k' vecteurs de mouvement du champ $C_C$ ne sont pas obligatoirement contigus.

Dans un mode de réalisation particulier n=k', c'est-à-dire que les k' vecteurs de mouvement du champ $C_C$ pointent respectivement vers k' pixels différents de la deuxième image $IR_2$

En variante, n<k', c'est-à-dire que deux pixels ou plus de la deuxième image $IR_2$ sont pointés par un même vecteur de mouvement parmi les k' vecteurs du champ $C_C$.

Une telle étape de calcul C3 est effectuée par un module logiciel de calcul CAL2_CO représenté à la **figure 2,** lequel module est piloté par le microprocesseur µP de l'unité de traitement UT_CO.

Le champ $C_C$ de vecteurs de mouvement ainsi calculé est alors ajouté dans une liste de prédicteurs candidats afin d'être utilisé en vue de la prédiction des pixels ou du mouvement du groupe $GP_C$ de k pixels courant.

Au cours d'une étape C4 représentée à la **figure 1**, il est procédé à la prédiction des pixels ou du mouvement du groupe $GP_C$ de k pixels courant à partir du champ $C_C$ de k' vecteurs de mouvement calculé à l'étape C3, si ce dernier a été sélectionné dans la liste comme prédicteur optimal. De façon connue en soi, une telle sélection fait suite à une comparaison des différents prédicteurs de la liste précitée selon un critère de performance de codage tel que par exemple le critère débit-distorsion bien connu de l'homme du métier. Un tel critère s'exprime par l'équation (1) ci-dessous:

(1) J=D+ÀR où :

- D représente la distorsion entre le groupe $GP_C$ de k pixels courant et le groupe de k pixels courant reconstruit,
- $\lambda$ représente un multiplicateur de Lagrange,
- R représente le coût en bits du codage de l'indice du prédicteur considéré dans la liste de prédicteurs candidats et éventuellement des k résiduels de vecteurs de mouvement si une prédiction de mouvement a été mise en œuvre.

La prédiction des pixels ou du mouvement du groupe $GP_C$ de k pixels courant est effectuée par héritage du champ $C_C$ de k' vecteurs de mouvement qui pointe selon les cas:

- soit sur ladite première image $IR_1$,
- soit sur ladite deuxième image $IR_2$,
- soit sur une image différente de l'image courante $I_C$ et desdites première et deuxième images $IR_1$ et $IR_2$. Cette autre image est par exemple une image $IR_3$ qui a déjà été codée puis décodée et qui appartient à la liste $LR_C$ d'images de référence représentée sur la **figure 2.**

Les différentes alternatives proposées à l'étape C4 dépendent de l'application et du contexte de codage vidéo envisagés. Le choix de la première image, de la deuxième image ou d'une autre image pour la prédiction est prédéterminé au codeur CO.

Dans le cas où le choix pour la prédiction des pixels ou du mouvement se porte sur une image de référence différente de la première ou de la deuxième image, il pourrait par exemple être déterminé que cette image de référence est telle qu'elle respecte la même distance temporelle avec l'image courante $I_C$ que la distance temporelle séparant la première image $IR_1$ et la deuxième image $IR_2$. Il pourrait être également déterminé que cette image de référence est toujours la première image contenue dans la liste $LR_C$ d'images de référence stockée dans la mémoire tampon MT_CO du codeur CO tel que représenté à la **figure 2.**

A l'issue de l'étape C4, un groupe $GPp_C$ de k pixels prédicteur du groupe $GP_C$ de pixels courant est délivré.

Une telle étape de prédiction C4 est effectuée par un module logiciel de prédiction PRED_CO représenté à la **figure 2,** lequel module est piloté par le microprocesseur $\mu$P de l'unité de traitement UT_CO.

Comme illustré à la **figure 1**, l'étape C4 de prédiction des pixels ou du mouvement du groupe $GP_C$ de k pixels courant comprend deux options C4a) et C4b).

Dans la première option C4a), k' vecteurs de mouvement du champ de vecteurs de mouvement $C_C$ sont utilisés pour prédire aussi bien la texture que le mouvement du groupe $GP_C$ de k pixels courant.

Dans la deuxième option C4b), un seul vecteur de mouvement choisi parmi les k' vecteurs de mouvement du champ de vecteurs de mouvement $C_C$ est utilisé pour prédire uniquement le mouvement du groupe $GP_C$ de k pixels courant.

Option C4a) **(figure 1**)

Dans le cas d'une prédiction de texture, au cours d'une étape $C4_1a$), les k pixels dudit groupe $GP_C$ de pixels courant sont prédits par n pixels de la première image, de la deuxième image ou d'une autre image de référence, lesdits n pixels étant pointés respectivement par les k' vecteurs de mouvement dudit champ $C_C$ de vecteurs de mouvement calculé.

Dans le cas où n=k, les k pixels dudit groupe $GP_C$ de pixels courant sont prédits respectivement par n pixels différents.

Dans le cas où n<k, au moins deux pixels du groupe $GP_C$ de pixels courant sont prédits à l'aide d'un même pixel parmi les n pixels.

A la suite de l'étape $C4_1a$), un groupe $GPp_C$ de k pixels prédicteur courant est obtenu.

Dans le cas d'une prédiction de mouvement, au cours d'une étape $C4_2a$), k vecteurs de mouvement associés respectivement aux k pixels dudit groupe $GP_C$ de pixels courant sont prédits par les k' vecteurs de mouvement dudit champ $C_C$ de vecteurs de mouvement calculé.

Dans le cas où k'=k, les k vecteurs de mouvement associés au groupe $GP_C$ de pixels courant sont prédits respectivement par k' vecteurs de mouvement différents dudit champ $C_C$ de vecteurs de mouvement calculé.

Dans le cas où k'<k, au moins deux des k vecteurs de mouvement associés au groupe $GP_C$ de pixels courant sont prédits par un même vecteur de mouvement parmi les k' vecteurs de mouvement dudit champ $C_C$ de vecteurs de mouvement calculé.

A la suite de l'étape C4$_2$a), un champ Cp$_C$ de k vecteurs de mouvement prédicteur est obtenu.

Option C4b) **(figure 1**)

L'option C4b) comprend :

- une étape C41b) de sélection d'un vecteur de mouvement parmi les k' vecteurs de mouvement dudit champ C$_C$ de vecteurs de mouvement calculé, au moyen d'une fonction mathématique ou statistique, délivrant un vecteur de mouvement sélectionné MV$_{sel}$,
- une étape C42b) de prédiction d'un unique vecteur de mouvement MV$_C$ du groupe de pixels courant à l'aide dudit vecteur de mouvement sélectionné MV$_{sel}$.

A la suite de l'étape C42b), un vecteur de mouvement prédicteur MVp$_C$ est obtenu.
Des exemples de fonctions mathématique ou statistique sont cités ci-dessous :

- moyenne des k' vecteurs de mouvement du champ C$_C$,
- médian des k' vecteurs de mouvement du champ C$_C$,
- critère de performance de codage prédéterminé, tel que par exemple le critère débit-distorsion pécité,
- etc.....

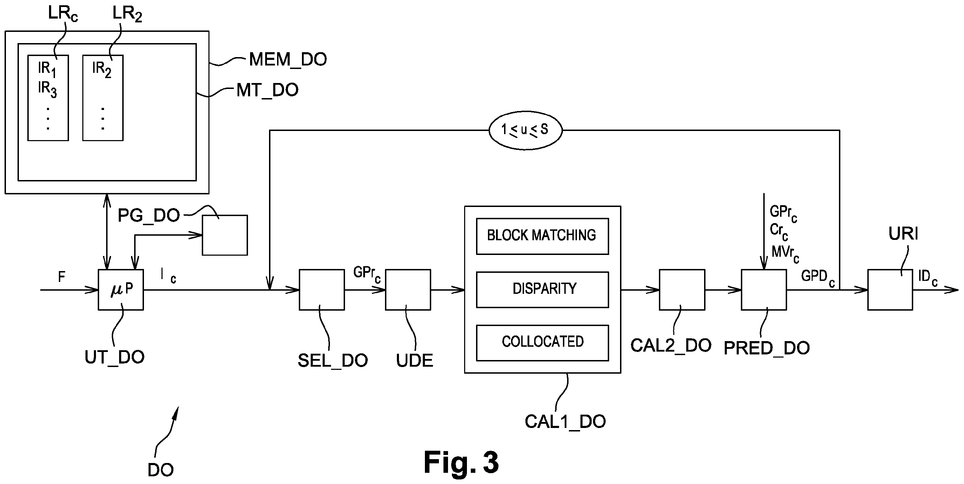

Au cours d'une étape C5 représentée à la **figure 1**, il est procédé au calcul des données résiduelles par comparaison des données de prédiction obtenues à l'étape C4 avec les données du groupe GP$_C$ de pixels courant.
Une telle étape de calcul C5 est effectuée par un module logiciel de calcul CAL3_CO représenté à la **figure 2,** lequel module est piloté par le microprocesseur µP de l'unité de traitement UT_CO.
Dans le cas où c'est l'étape C4$_1$a) qui a été mise en œuvre, il est procédé, au cours d'une étape C5$_1$a), à l'obtention d'un groupe GPr$_C$ de k pixels résiduel courant par calcul de la différence entre le groupe GP$_C$ de k pixels courant et le groupe GPp$_C$ de k pixels prédicteur.
Dans le cas où c'est l'étape C4$_2$a) qui a été mise en œuvre, il est procédé, au cours d'une étape C5$_2$a), à l'obtention d'un champ Cr$_C$ de k vecteurs de mouvement résiduel courant par calcul de la différence entre les k vecteurs de mouvement associés respectivement aux k pixels du groupe GP$_C$ de pixels courant et les k vecteurs de mouvement du champ Cp$_C$ de vecteurs de mouvement prédicteur.
Dans le cas où c'est l'étape C4b) qui a été mise en œuvre, il est procédé, au cours d'une étape C5b), à l'obtention d'un vecteur de mouvement résiduel courant MVr$_C$ par calcul de la différence entre l'unique vecteur de mouvement MV$_C$ associé au groupe GP$_C$ de pixels courant et le vecteur de mouvement prédicteur MVp$_C$.
Au cours d'une étape C6 représentée à la **figure 1**, en fonction des options de prédiction choisies, il est procédé à l'encodage soit du groupe GPr$_C$ de k pixels résiduel courant, soit du champ Cr$_C$ de k vecteurs de mouvement résiduel courant, soit du vecteur de mouvement résiduel courant MVr$_C$. Un flux de données F est alors délivré à l'issue de l'étape C6.
Une telle étape d'encodage C6 est effectuée par un encodeur ENC tel que représenté à la **figure 2,** lequel est par exemple conforme à la norme HEVC. L'encodeur ENC est piloté par le microprocesseur µP de l'unité de traitement UT_CO.
Les étapes de codage C1 à C6 sont réitérées pour l'ensemble des groupes de pixels GP$_1$, GP$_2$,..., GP$_u$,..., GP$_S$.
Conformément à l'invention, le flux de données F ne contient avantageusement pas de données relatives au champ C$_C$ de vecteurs de mouvement calculé à l'étape C3 précitée, puisque ces données sont associées à des groupes de pixels déjà codés puis décodés et donc disponibles au décodeur. Il est donc inutile de transmettre ces données dans le flux de données F qui contient éventuellement des données résiduelles de mouvement ou de pixels si elles existent.
Le flux de données F est ensuite transmis au moyen d'une interface de transmission (non représentée) du codeur CO, via un réseau de communication, à un terminal distant. Celui-ci comporte un dispositif de décodage DO tel que représenté à la **figure 3.**

Description détaillée du principe général de la partie décodage

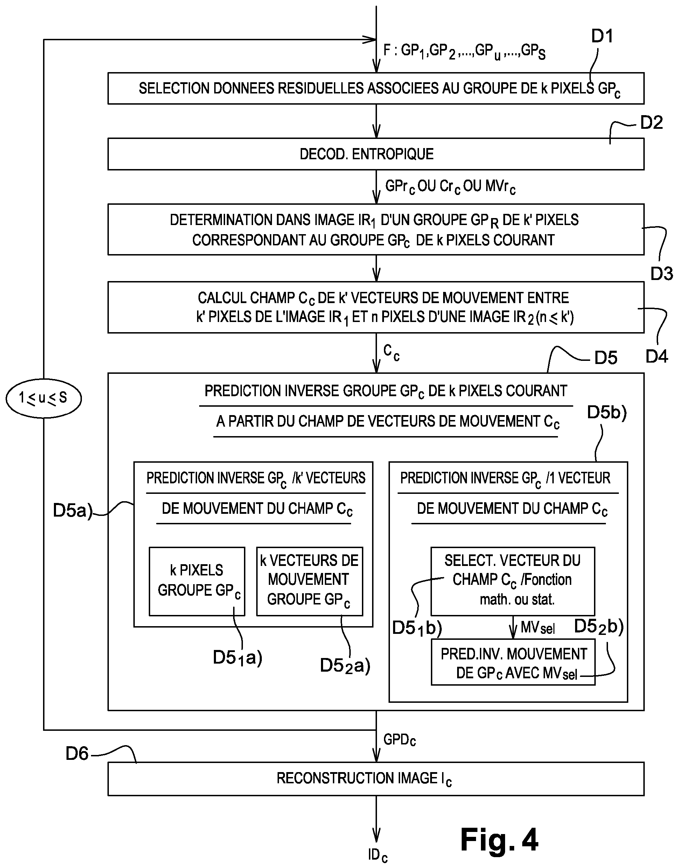

Un mode de réalisation général de l'invention va maintenant être décrit, dans lequel le procédé de décodage selon l'invention est utilisé pour décoder une image ou une séquence d'images codées dans un flux binaire proche de celui qu'on obtient par un décodage selon la norme HEVC. Dans ce mode de réalisation, le procédé de décodage selon l'invention est par exemple implémenté de manière logicielle ou matérielle par modifications d'un décodeur initialement conforme à la norme HEVC. Le procédé de décodage selon l'invention est représenté sous la forme d'un algorithme comportant des étapes D1 à D6 représentées à la **figure 4.**

Selon le mode de réalisation de l'invention, le procédé de décodage selon l'invention est implémenté dans le dispositif de décodage DO représenté à la **figure 3**.

Comme illustré en **figure 3,** un tel dispositif de décodage DO comprend une mémoire MEM_DO comprenant une mémoire tampon MT_DO, une unité de traitement UT_DO équipée par exemple d'un microprocesseur $\mu$P et pilotée par un programme d'ordinateur PG_DO qui met en œuvre le procédé de décodage selon l'invention. A l'initialisation, les instructions de code du programme d'ordinateur PG_DO sont par exemple chargées dans une mémoire RAM (non représentée) avant d'être exécutées par le processeur de l'unité de traitement UT_DO.

Le procédé de décodage représenté sur la **figure 4** s'applique à toute image courante $I_C$ d'une séquence SI de L images à décoder (L$\geq$1).

A cet effet, une image courante $I_C$ à décoder est considérée dans la séquence d'images SI.

Dans le cas où le décodage utilisé est de type 2D, l'image courante $I_C$ est en deux dimensions et est issue d'une même caméra.

Dans le cas où le décodage utilisé est de type 3D :

- l'image courante $I_C$ est une vue considérée parmi plusieurs vues représentant une même scène au même instant et issues chacune de différentes caméras orientées selon des points de vue différents,
- l'image courante $I_C$ est une composante de texture ou une composante de profondeur,
- etc...

A cet effet, des informations représentatives de l'image courante $I_C$ à décoder sont identifiées classiquement dans le flux F reçu au décodeur DO.

Au cours d'une étape D1 représentée à la **figure 4,** il est procédé à la sélection, dans le flux F, d'un groupe $GPr_C$ de k pixels courant à décoder parmi les S groupes de pixels $GP_1$, $GP_2$,..., $GP_u$,..., $GP_S$ (1$\leq$u$\leq$S) à décoder qui sont contenus dans le flux F.

En référence à la **figure 3,** ladite étape de sélection D1 est mise en œuvre par un module de sélection SEL_DO du décodeur DO, lequel module est piloté par le microprocesseur $\mu$P de l'unité de traitement UT_DO.

Au cours d'une étape D2 représentée à la **figure 4,** il est procédé au décodage entropique des données résiduelles encodées courantes $GPr_C$, $Cr_C$, ou $MVr_C$ associées au groupe $GP_C$ de k pixels courant à décoder, par lecture du flux F à l'aide d'un pointeur de flux.

Plus précisément, ces données résiduelles encodées sont décodées par une unité UDE de décodage entropique tel que représentée à la **figure 3,** ladite unité étant pilotée par le microprocesseur $\mu$P de l'unité de traitement UT_DO. Une telle unité est bien connue en tant que telle et ne sera pas décrite plus avant.

Au cours d'une étape D3 représentée à la **figure 4,** il est procédé à la détermination, dans une première image $IR_1$ différente de l'image courante $I_C$ à décoder, d'un groupe $GP_R$ de k' pixels correspondant au groupe $GP_C$ de k pixels courant à décoder de l'image courante $I_C$.

On suppose que dans l'exemple représenté, k'=k. Par conséquent, les groupes de pixels $GP_C$ et $GP_R$ sont des blocs de seize pixels.

Dans l'exemple représenté, la première image $IR_1$ est une image de la séquence d'images SI qui a déjà été décodée, ladite première image appartenant à une liste d'images de référence disponible en vue de la prédiction inverse des pixels ou du mouvement de l'image courante $I_C$. Une telle liste, notée $LR_C$ sur la **figure 3,** est stockée dans la mémoire tampon MT_DO du décodeur DO. Dans l'exemple représenté où le décodage est de type HEVC, la mémoire tampon MT_DO est une mémoire DPB (de l'anglais « Decoded Picture Buffer »).

Dans l'exemple représenté sur la **figure 3,** ladite étape de détermination est mise en œuvre par un module logiciel de calcul CAL1_DO qui est piloté par le microprocesseur $\mu$P de l'unité de traitement UT_DO.

Une telle étape est identique à l'étape de détermination C2 qui a été décrite ci-dessus en liaison avec le procédé de codage. Par conséquent, l'étape de détermination D3 ne sera pas décrite plus longuement.

Au cours d'une étape D4 représentée à la **figure 4,** il est procédé au calcul d'un champ $C_C$ de k' vecteurs de mouvement entre chacun des k' pixels du groupe de pixels $GP_R$ de la première image $IR_1$ et respectivement n pixels (n$\leq$k') d'au moins une deuxième image $IR_2$ différente de l'image courante. La deuxième image $IR_2$ est une image qui a déjà été décodée et qui appartient par exemple à une liste d'images de référence de la première image $IR_1$. Une telle liste, notée $LR_1$ sur la **figure 3,** est stockée dans la mémoire tampon MT_DO du décodeur DO.

A l'issue de l'étape de calcul D4, un champ $C_C$ de vecteurs de mouvement dense est alors obtenu, en ce sens que les n pixels de la deuxième image $IR_2$ qui sont pointés par les k' vecteurs de mouvement du champ $C_C$ ne sont pas obligatoirement contigus.

Dans un mode de réalisation particulier, n=k', c'est-à-dire que les k' vecteurs de mouvement du champ $C_C$ pointent respectivement vers k' pixels différents de la deuxième image $IR_2$

En variante, n<k', c'est-à-dire que deux pixels ou plus de la deuxième image $IR_2$ sont pointés par un même vecteur de mouvement parmi les k' vecteurs du champ $C_C$.

Une telle étape de calcul D4 est effectuée par un module logiciel de calcul CAL2_DO représenté à la **figure 3,** lequel module est piloté par le microprocesseur μP de l'unité de traitement UT_DO.

Le champ $C_C$ de vecteurs de mouvement ainsi calculé est alors ajouté dans une liste de prédicteurs candidats afin d'être utilisé en vue de la prédiction inverse des pixels ou du mouvement du groupe $GP_C$ de k pixels courant à décoder.

L'étape de calcul D4 précitée est en tout point identique à l'étape de calcul C3 effectuée au codage. Pour cette raison, l'étape de calcul D4 ne sera pas décrite plus longuement.

Au cours d'une étape D5 représentée à la **figure 4,** il est procédé à la prédiction inverse des pixels ou du mouvement du groupe $GP_C$ de k pixels courant à partir du champ $C_C$ de k' vecteurs de mouvement calculé à l'étape D4, si ce dernier a été sélectionné dans la liste comme prédicteur optimal. De façon connue en soi, une telle sélection fait suite à une comparaison des différents prédicteurs de la liste précitée selon un critère de performance de décodage tel que par exemple le critère débit-distorsion bien connu de l'homme du métier. Un tel critère s'exprime par l'équation (1) ci-dessous:

$$(1) \ J=D+\lambda R$$

où :

- D représente la distorsion entre le groupe $GP_C$ de k pixels courant et le groupe de k pixels courant reconstruit,
- $\lambda$ représente un multiplicateur de Lagrange,
- R représente le coût en bits du codage de l'indice du prédicteur considéré dans la liste de prédicteurs candidats et éventuellement des k résiduels de vecteurs de mouvement si une prédiction de mouvement a été mise en œuvre.

La prédiction inverse des pixels ou du mouvement du groupe $GP_C$ de k pixels courant est effectuée par héritage du champ $C_C$ de k' vecteurs de mouvement qui pointe selon les cas :

- soit sur ladite première image $IR_1$,
- soit sur ladite deuxième image $IR_2$,
- soit sur une image différente de l'image courante $I_C$ et desdites première et deuxième images $IR_1$ et $IR_2$. Cette autre image est par exemple une image $IR_3$ qui a déjà été décodée et qui appartient à la liste d'images de référence $LR_C$ représentée sur la **figure 3.**

Les différentes alternatives proposées à l'étape D5 dépendent de l'application et du contexte de décodage vidéo envisagés. Le choix de la première image, de la deuxième image ou d'une autre image pour la prédiction est prédéterminé au décodeur DO.

Dans le cas où le choix pour la prédiction inverse des pixels ou du mouvement se porte sur une image de référence différente de la première ou de la deuxième image, il pourrait par exemple être déterminé que cette image de référence est telle qu'elle respecte la même distance temporelle avec l'image courante $I_C$ que la distance temporelle séparant la première image $IR_1$ et la deuxième image $IR_2$. Il pourrait être également déterminé que cette image de référence est toujours la première image contenue dans la liste LR d'images de référence stockée dans la mémoire tampon MT_DO du décodeur DO tel que représenté à la **figure 3.**

A l'issue de l'étape D5, un groupe $GP_C$ de k pixels courant reconstruit est délivré.

Une telle étape de prédiction D5 est effectuée par un module logiciel de prédiction PRED_DO représenté à la **figure 3,** lequel module est piloté par le microprocesseur μP de l'unité de traitement UT_DO.

Comme illustré à la **figure 4,** l'étape D5 de prédiction des pixels ou du mouvement du groupe $GP_C$ de k pixels courant à décoder comprend deux options D5a) et D5b).

Dans la première option D5a), k' vecteurs de mouvement du champ de vecteurs de mouvement $C_C$ sont utilisés pour reconstruire aussi bien la texture que le mouvement du groupe $GP_C$ de k pixels courant à décoder.

Dans la deuxième option D5b), un seul vecteur de mouvement choisi parmi les k' vecteurs de mouvement du champ de vecteurs de mouvement $C_C$ est utilisé pour reconstruire uniquement le mouvement du groupe $GP_C$ de k pixels courant.

Option D5a) **(figure 4)**

Dans le cas d'une prédiction inverse de texture, au cours d'une étape $D5_1a$), il est procédé à la reconstruction des k pixels dudit groupe $GP_C$ de pixels courant à partir :

- de n pixels de la première image, de la deuxième image ou d'une autre image de référence, lesdits n pixels correspondants étant pointés respectivement par les k' vecteurs de mouvement dudit champ $C_C$ de vecteurs de mouvement calculé,
- et du groupe de pixels résiduel courant $GPr_C$ déterminé à l'étape D2.

Dans le cas où n=k, les k pixels dudit groupe $GP_C$ de pixels courant sont reconstruits respectivement par n pixels différents.

Dans le cas où n<k, au moins deux pixels du groupe $GP_C$ de pixels courant sont reconstruits à l'aide d'un même pixel parmi les n pixels.

A la suite de l'étape D5$_1$a), un groupe $GPD_C$ de k pixels décodé courant est reconstruit.

Dans le cas d'une prédiction inverse de mouvement, au cours d'une étape D5$_2$a), il est procédé à la reconstruction de k vecteurs de mouvement associés respectivement aux k pixels dudit groupe de pixels courant, à partir des k' vecteurs de mouvement dudit champ de vecteurs de mouvement obtenu $C_C$ et dudit champ de vecteurs de mouvement résiduel courant déterminé $Cr_C$ obtenu à l'étape D2.

Dans le cas où k'=k, les k vecteurs de mouvement associés au groupe $GP_C$ de pixels courant sont reconstruits à partir respectivement de k' vecteurs de mouvement différents dudit champ $C_C$ de vecteurs de mouvement calculé.

Dans le cas où k'<k, au moins deux des k vecteurs de mouvement associés au groupe $GP_C$ de pixels courant sont reconstruits à partir d'un même vecteur de mouvement parmi les k' vecteurs de mouvement dudit champ $C_C$ de vecteurs de mouvement calculé.

A la suite de l'étape D5$_2$a), un champ $C_C$ de k vecteurs de mouvement courant est reconstruit, ce qui permet de reconstruire un groupe $GPD_C$ de k pixels décodé courant.

Option D5b) (figure 4)

L'option D5b) comprend :

- une étape D51b) de sélection d'un vecteur de mouvement parmi les k vecteurs de mouvement dudit champ $C_C$ de vecteurs de mouvement calculé, au moyen d'une fonction mathématique ou statistique, délivrant un vecteur de mouvement sélectionné $MV_{sel}$,
- une étape D52b) de prédiction inverse de mouvement du groupe de pixels courant à l'aide dudit vecteur de mouvement sélectionné $MV_{sel}$.

Ladite étape de prédiction inverse D52b) consiste à reconstruire un vecteur de mouvement associé au groupe de pixels courant $GP_C$ à l'aide dudit vecteur de mouvement sélectionné $MV_{sel}$ et du vecteur de mouvement résiduel courant $MV_r$ déterminé à l'étape D2.

Ledit vecteur de mouvement reconstruit permet ainsi de reconstruire un groupe $GPD_C$ de k pixels décodé courant.

Des exemples de fonctions mathématique ou statistique ont été citées plus haut dans la description en liaison avec l'étape de sélection C41b).

Les étapes de décodage D1 à D5 qui viennent d'être décrites ci-dessus sont à nouveau mises en œuvre pour les S groupes de pixels $GP_1$, $GP_2$,..., $GP_u$,..., $GP_S$ (1≤u≤S) de l'image courante $I_C$ à décoder qui sont contenus dans le flux F.

En référence à la figure 4, il est procédé, au cours d'une étape D6, à la reconstruction d'une image courante décodée $ID_C$.

En référence à la figure 3, l'étape de reconstruction D6 est mise en œuvre par une unité de reconstruction URI qui écrit les groupes de pixels décodés dans l'image décodée $ID_C$ au fur et à mesure que ces groupes de pixels deviennent disponibles. Ladite unité est pilotée par le microprocesseur μP de l'unité de traitement UT_DO.

Description détaillée de différents modes de réalisation du procédé de codage/décodage

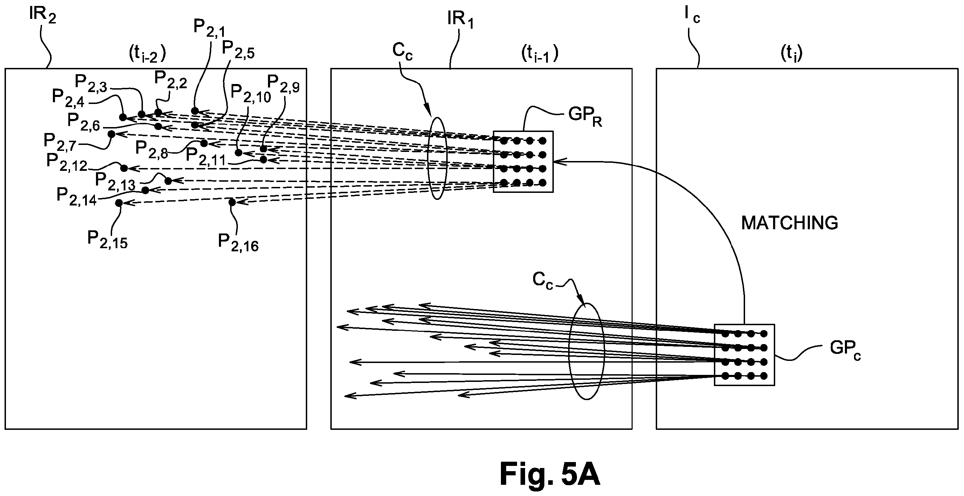

En référence aux figures 5A à 5K, on va maintenant décrire différents modes de réalisation possibles conformes à l'invention. Ces modes de réalisation peuvent être mis en œuvre aussi bien au codage qu'au décodage.

Dans l'exemple illustré sur la figure 5A :

- l'image courante $I_C$ est une image en deux dimensions située à un instant courant $t_i$,
- la première image $IR_1$ est une image en deux dimensions située à un instant $t_{i-1}$ qui précède immédiatement l'instant courant $t_i$,
- la deuxième image $IR_2$ est une image en deux dimensions située à un instant $t_{i-2}$ qui précède immédiatement l'instant

$t_{i-1}$.

Au cours de l'étape C2 ou D3 précitée, le groupe $GP_R$ de seize pixels correspondant, dans la première image $IR_1$, au groupe de pixels courant $GP_C$ est déterminé classiquement, par exemple au moyen de la technique de « block matching ».

Au cours de l'étape C3 ou D4 précitée, il est procédé au calcul du champ dense $C_C$ de seize vecteurs de mouvement entre chacun des seize pixels du groupe de pixels $GP_R$ de la première image $IR_1$ et respectivement seize pixels $P_{2,1}$, $P_{2,2}$, $P_{2,3}$, $P_{2,4}$, $P_{2,5}$, $P_{2,6}$, $P_{2,7}$, $P_{2,8}$, $P_{2,9}$, $P_{2,10}$, $P_{2,11}$, $P_{2,12}$, $P_{2,13}$, $P_{2,14}$, $P_{2,15}$, $P_{2,16}$ appartenant à la deuxième image $IR_2$ différente de l'image courante.

Au cours de l'étape C4 ou D5 précitée, il est procédé à la prédiction des pixels ou du mouvement du groupe $GP_C$ de seize pixels courant à partir du champ $C_C$ de seize vecteurs de mouvement calculé à l'étape C3 ou D4.

Une telle prédiction consiste par exemple à prédire les seize vecteurs de mouvement (non représentés) associés respectivement aux seize pixels du groupe $GP_C$ de pixels courant au moyen respectivement des seize vecteurs de mouvement composant le champs Cc.

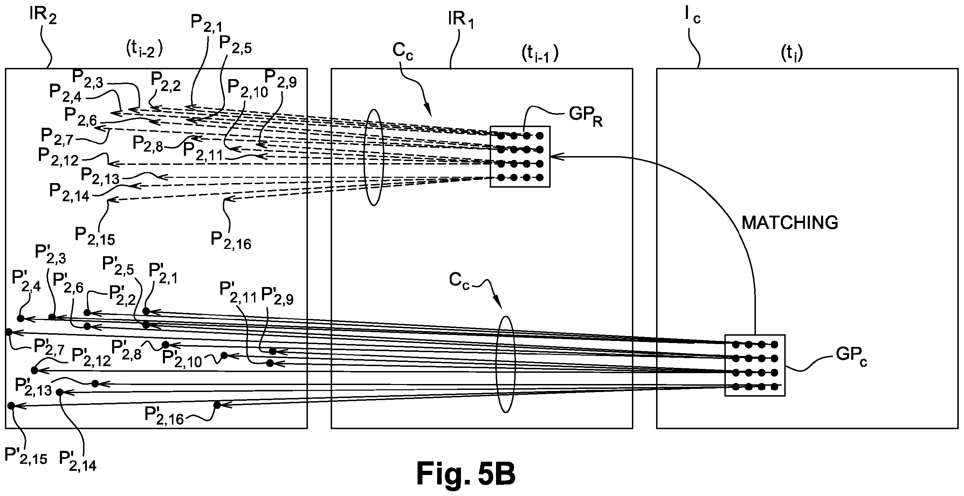

Dans l'exemple illustré sur la **figure 5B** :

- l'image courante $I_C$ est une image en deux dimensions située à un instant courant $t_i$,
- la première image $IR_1$ est une image en deux dimensions située à un instant $t_{i-1}$ qui précède immédiatement l'instant courant $t_i$,
- la deuxième image $IR_2$ est une image en deux dimensions située à un instant $t_{i-2}$ qui précède immédiatement l'instant $t_{i-1}$.

Au cours de l'étape C2 ou D3 précitée, le groupe $GP_R$ de seize pixels correspondant, dans la première image $IR_1$, au groupe courant $GP_C$ est déterminé classiquement, par exemple au moyen de la technique de « block matching ».

Au cours de l'étape C3 ou D4 précitée, il est procédé au calcul du champ dense $C_C$ de seize vecteurs de mouvement entre chacun des seize pixels du groupe de pixels $GP_R$ de la première image $IR_1$ et respectivement seize pixels $P_{2,1}$, $P_{2,2}$, $P_{2,3}$, $P_{2,4}$, $P_{2,5}$, $P_{2,6}$, $P_{2,7}$, $P_{2,8}$, $P_{2,9}$, $P_{2,10}$, $P_{2,11}$, $P_{2,12}$, $P_{2,13}$, $P_{2,14}$, $P_{2,15}$, $P_{2,16}$ appartenant à la deuxième image $IR_2$ différente de l'image courante.

Au cours de l'étape C4 ou D5 précitée, il est procédé à la prédiction des pixels ou du mouvement du groupe $GP_C$ de seize pixels courant à partir du champ $C_C$ de seize vecteurs de mouvement calculé à l'étape C3 ou D4.

Une telle prédiction consiste par exemple à prédire les seize pixels du groupe $GP_C$ de pixels courant au moyen respectivement des seize pixels $P'_{2,1}$, $P'_{2,2}$, $P'_{2,3}$, $P'_{2,4}$, $P'_{2,5}$, $P'_{2,6}$, $P'_{2,7}$, $P'_{2,8}$, $P'_{2,9}$, $P'_{2,10}$, $P'_{2,11}$, $P'_{2,12}$, $P'_{2,13}$, $P'_{2,14}$, $P'_{2,15}$, $P'_{2,16}$ de l'image $IR_2$ qui sont pointés respectivement par les seize vecteurs de mouvement du champ $C_C$.

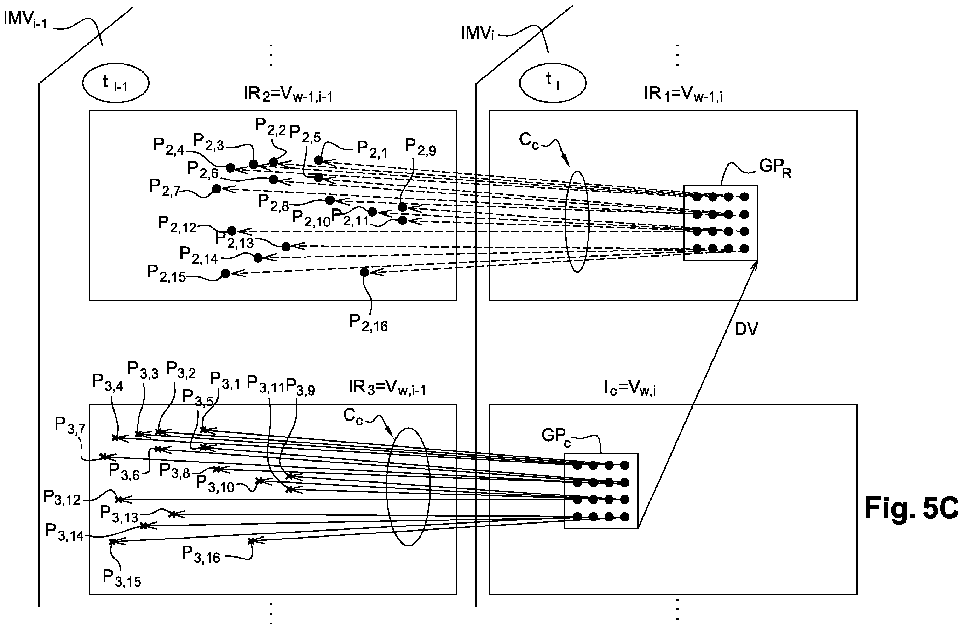

A cet effet, il est procédé à un étalonnage de ces seize vecteurs de mouvement puisque la distance temporelle entre l'image courante $I_C$ et la deuxième image $IR_2$ est différente de la distance temporelle séparant la première image $IR_1$ de la deuxième image $IR_2$. Dans l'exemple illustré sur la **figure 5C,** le codage vidéo est de type 3D et chaque image à coder dans la séquence d'images SI est une image multi-vues qui peut être par exemple au format MVV (pour « Multiview Video » en anglais) ou au format MVD (pour « Multiview Video + Depth en anglais). A un instant courant $t_i$, une image multi-vues $IMV_i$ comprend T vues $V_{1,i}$, $V_{2,i}$,..., $V_{w,i}$...$V_{T,i}$ où $1 \leq w \leq T$, chacune de ces vues représentant une même scène selon respectivement T points de vues différents.

Sur la **figure 5C** :

- l'image courante $I_C$ est une vue courante $V_{w,i}$ située à l'instant courant $t_i$ dans l'image multi-vues $IMV_i$ courante,
- la première image $IR_1$ est une vue $V_{w-1,i}$ située à l'instant $t_i$, ladite vue étant située immédiatement au-dessus de la vue courante $V_{w,i}$ dans l'image multi-vues $IMV_i$ courante et ayant déjà été codée puis décodée,
- la deuxième image $IR_2$ est une vue $V_{w-1,i-1}$ d'une image multi-vues $IMV_{i-1}$ qui est située à un instant $t_{i-1}$ précédant immédiatement l'instant courant $t_i$,
- une troisième image $IR_3$ est une vue $V_{w,i-1}$ de l'image multi-vues $IMV_{i-1}$ qui est située à un instant $t_{i-1}$ précédant immédiatement l'instant courant $t_i$.

Au cours de l'étape C2 ou D3 précitée, le groupe $GP_R$ de seize pixels correspondant, dans la première image $IR_1$, au groupe de pixels courant $GP_C$ est déterminé classiquement par un unique vecteur de disparité DV entre l'image courante $I_C$ et la première image $IR_1$.

Au cours de l'étape C3 ou D4 précitée, il est procédé au calcul du champ dense $C_C$ de seize vecteurs de mouvement entre chacun des seize pixels du groupe de pixels $GP_R$ de la première image $IR_1$ et respectivement seize pixels $P_{2,1}$, $P_{2,2}$, $P_{2,3}$, $P_{2,4}$, $P_{2,5}$, $P_{2,6}$, $P_{2,7}$, $P_{2,8}$, $P_{2,9}$, $P_{2,10}$, $P_{2,11}$, $P_{2,12}$, $P_{2,13}$, $P_{2,14}$, $P_{2,15}$, $P_{2,16}$ appartenant à la deuxième image $IR_2$.

Au cours de l'étape C4 ou D5 précitée, il est procédé à la prédiction des pixels ou du mouvement du groupe

$GP_C$ de seize pixels courant à partir du champ $C_C$ de seize vecteurs de mouvement calculé à l'étape C3 ou D4, par rapport à ladite troisième image $IR_3$. Une telle prédiction consiste par exemple à prédire les seize pixels du groupe $GP_C$ de pixels courant au moyen respectivement des seize pixels $P_{3,13}$ $P_{3,2}$, $P_{3,3}$, $P_{3,4}$, $P_{3,5}$, $P_{3,6}$, $P_{3,7}$, $P_{3,8}$, $P_{3,9}$, $P_{3,10}$, $P_{3,11}$, $P_{3,12}$, $P_{3,13}$, $P_{3,14}$, $P_{3,15}$, $P_{3,16}$ de la troisième image $IR_3$ qui sont pointés respectivement par les seize vecteurs de mouvement du champ $C_C$.

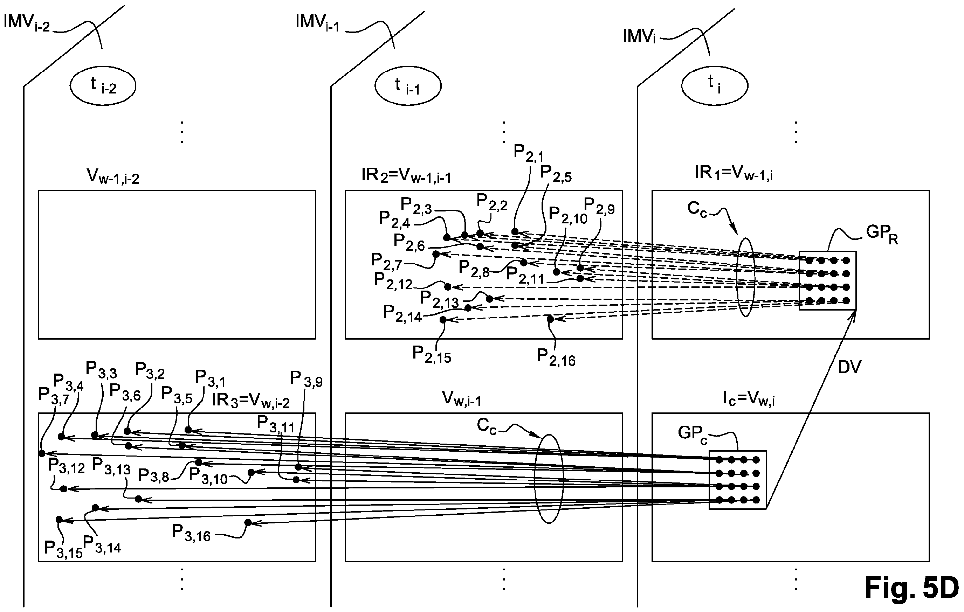

Dans l'exemple illustré sur la **figure 5D,** le codage vidéo est de type 3D et chaque image à coder dans la séquence d'images SI est une image multi-vues qui peut être par exemple au format MVV ou MVD. A un instant courant $t_i$, une image multi-vues $IMV_i$ comprend T vues $V_{1},i$, $V_{2,i}$,..., $V_{w,i}$,... $V_{T,i}$ où $1 \leq w \leq T$, chacune de ces vues représentant une même scène selon respectivement T points de vues différents.

Sur la **figure 5D** :

- l'image courante $I_C$ est une vue courante $V_{w,i}$ située à l'instant courant $t_i$ dans l'image multi-vues $IMV_i$ courante,
- la première image $IR_1$ est une vue $V_{w-1,i}$ située à l'instant $t_i$, ladite vue étant située immédiatement au-dessus de la vue courante $V_{w,i}$ dans l'image multi-vues $IMV_i$ courante et ayant déjà été codée puis décodée,
- la deuxième image $IR_2$ est une vue $V_{w-1,i-1}$ d'une image multi-vues $IMV_{i-1}$ qui est située à un instant $t_{i-1}$ précédant immédiatement l'instant courant $t_i$,
- la troisième image $IR_3$ est une vue $V_{w,i-2}$ d'une image multi-vues $IMV_{i-2}$ qui est située à un instant $t_{i-2}$ précédant immédiatement l'instant $t_{i-1}$.

Au cours de l'étape C2 ou D3 précitée, le groupe $GP_R$ de seize pixels correspondant, dans la première image $IR_1$, au groupe de pixels courant $GP_C$ est déterminé classiquement par un unique vecteur de disparité DV entre l'image courante $I_C$ et la première image $IR_1$.

Au cours de l'étape C3 ou D4 précitée, il est procédé au calcul du champ dense $C_C$ de seize vecteurs de mouvement entre chacun des seize pixels du groupe de pixels $GP_R$ de la première image $IR_1$ et respectivement seize pixels $P_{2,1}$, $P_{2,2}$, $P_{2,3}$, $P_{2,4}$, $P_{2,5}$, $P_{2,6}$, $P_{2,7}$, $P_{2,8}$, $P_{2,9}$, $P_{2,10}$, $P_{2,11}$, $P_{2,12}$, $P_{2,13}$, $P_{2,14}$, $P_{2,15}$, $P_{2,16}$ appartenant à la deuxième image $IR_2$.

Au cours de l'étape C4 ou D5 précitée, il est procédé à la prédiction des pixels ou du mouvement du groupe $GP_C$ de seize pixels courant à partir du champ $C_C$ de seize vecteurs de mouvement calculé à l'étape C3 ou D4, par rapport à ladite troisième image $IR_3$. Une telle prédiction consiste par exemple à prédire les seize pixels du groupe $GP_C$ de pixels courant au moyen respectivement des seize pixels $P_{3,1}$, $P_{3,2}$, $P_{3,3}$, $P_{3,4}$, $P_{3,5}$, $P_{3,6}$, $P_{3,7}$, $P_{3,8}$, $P_{3,9}$, $P_{3,10}$, $P_{3,11}$, $P_{3,12}$, $P_{3,13}$, $P_{3,14}$, $P_{3,15}$, $P_{3,16}$ de la troisième image $IR_3$ qui sont pointés respectivement par les seize vecteurs de mouvement du champ $C_C$. A cet effet, il est procédé à un étalonnage de ces seize vecteurs de mouvement puisque la distance temporelle entre l'image courante $I_C$ et la troisième image $IR_3$ est différente de la distance temporelle séparant la première image $IR_1$ de la deuxième image $IR_2$.

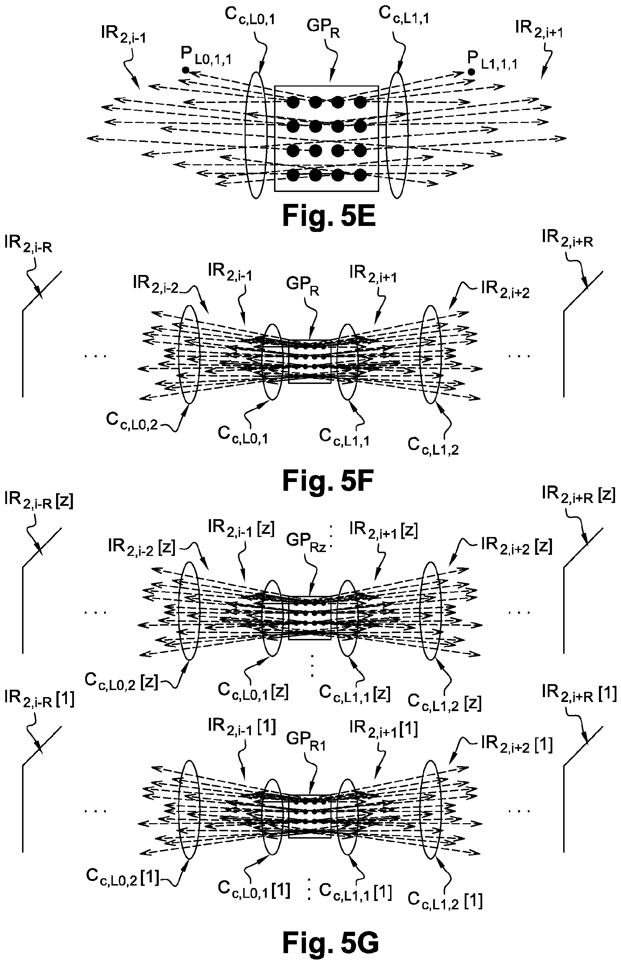

Dans l'exemple illustré sur la **figure 5E,** le codage vidéo est de type 2D ou 3D. La **figure 5E** représente un groupe $GP_R$ de seize pixels correspondant, dans la première image $IR_1$ (non représentée), au groupe de pixels courant $GP_C$ (non représenté) de l'image courante $I_C$ (non représentée). Le groupe de pixels $GP_R$ a été obtenu au cours de l'étape C2 ou D3 précitée, par exemple au moyen d'un unique vecteur de disparité DV entre l'image courante $I_C$ et la première image $IR_1$.

Le mode de réalisation représenté sur la **figure 5E** se distingue des modes de réalisation précédents par le fait qu'au cours de l'étape C3 ou D4 précitée, il est procédé au calcul de deux champs denses $C_{C,L0,1}$ et $C_{C,L1,1}$ contenant chacun seize vecteurs de mouvement.

Le champ $C_{C,L0,1}$ est calculé entre chacun des seize pixels du groupe de pixels $GP_R$ de la première image $IR_1$ et respectivement seize pixels $P_{L0,1,1}$, $P_{L0,1,2}$, $P_{L0,1,3}$, $P_{L0,1,4}$, $P_{L0,1,5}$, $P_{L0,1,6}$, $P_{L0,1,7}$, $P_{L0,1,8}$, $P_{L0,1,9}$, $P_{L0,1,10}$, $P_{L0,1,11}$, $P_{L0,1,12}$, $P_{L0,1,13}$, $P_{L0,1,14}$, $P_{L0,1,15}$, $P_{L0,1,16}$ appartenant à une deuxième image $IR_{2,i-1}$ qui est située par exemple à un instant $t_{i-1}$ qui précède immédiatement l'instant $t_i$ auquel est codée l'image courante $I_C$. A des fins de simplicité de la **figure 5E,** seul le pixel $P_{L0,1,1}$ est représenté.

Le champ $C_{C,L1,1}$ est calculé entre chacun des seize pixels du groupe de pixels $GP_R$ de la première image $IR_1$ et respectivement seize pixels $P_{L1,1,1}$, $P_{L1,1,2}$, $P_{L1,1,3}$, $P_{L1,1,4}$, $P_{L1,1,5}$, $P_{L1,1,6}$, $P_{L1,1,7}$, $P_{L1,1,8}$, $P_{L1,1,9}$, $P_{L1,1,10}$, $P_{L1,1,11}$, $P_{L1,1,12}$, $P_{L1,1,13}$, $P_{L1,1,14}$, $P_{L1,1,15}$, $P_{L1,1,16}$ appartenant à une autre deuxième image $IR_{2,i+1}$ qui est située à un instant $t_{i+1}$ qui suit immédiatement l'instant $t_i$ auquel est codée l'image courante $I_C$. A des fins de simplicité de la **figure 5E,** seul le pixel $P_{L1,1,1}$ est représenté.

Les deux champs de vecteurs de mouvement $C_{C,L0,1}$ et $C_{C,L1,1}$ ainsi calculés forment un prédicteur qui est ajouté dans une liste de prédicteurs candidats afin d'être utilisés en vue de la prédiction du groupe $GP_C$ de k pixels courant.

Au cours de l'étape C4 ou D5 précitée, il est procédé à la prédiction des pixels ou du mouvement du groupe $GP_C$ de seize pixels courant à partir des deux champs de vecteurs de mouvement $C_{C,L0,1}$ et $C_{C,L1,1}$ ainsi calculés au lieu d'un seul champ comme cela a été décrit précédemment pour les autres modes de réalisation.

La prédiction des pixels ou du mouvement du groupe $GP_C$ de seize pixels courant est donc mise en œuvre par rapport :

- au champ $C_{C,L0,1}$, les vecteurs de ce champ pointant sur une image de référence,
- au champ $C_{C,L1,1}$, les vecteurs de ce champ pointant sur une autre image de référence.

L'exemple illustré sur la **figure 5F** représente une généralisation du mode de réalisation représenté à la **figure 5E.** Dans l'exemple de la **figure 5E,** il est procédé au calcul d'une première pluralité R de champs de vecteurs de mouvement denses $C_{C,L0,1}$, $C_{C,L0,2}$,....,$C_{C,L0,R}$ et d'une deuxième pluralité R de champs de vecteurs de mouvement denses $C_{C,L1,1}$, $C_{C,L1,2}$,....,$C_{C,L1,R}$, chaque champ de vecteurs de mouvement contenant seize vecteurs de mouvement.

La première pluralité R de champs de vecteurs de mouvement denses $C_{C,L0,1}$, $C_{C,L0,2}$,....,$C_{C,L0,R}$ est calculée entre chacun des seize pixels du groupe de pixels $GP_R$ de la première image $IR_1$ et respectivement seize pixels appartenant à R images $IR_{2,i-1}$, $IR_{2,i-2}$,..., $IR_{2,i-R}$ qui sont situées par exemple respectivement à des instants $t_{i-1}$, $t_{i-2}$,..., $t_{i-R}$ qui précèdent l'instant $t_i$ auquel est codée l'image courante $I_C$.

La deuxième pluralité R de champs de vecteurs de mouvement denses $C_{C,L1,1}$, $C_{C,L1,2}$,....,$C_{C,L1,R}$ est calculée entre chacun des seize pixels du groupe de pixels $GP_R$ de la première image $IR_1$ et respectivement seize pixels appartenant à R images $IR_{2,i+1}$, $IR_{2,i+2}$,..., $IR_{2,i+R}$ qui sont situées par exemple respectivement à des instants $t_{i+1}$, $t_{i+2}$,..., $t_{i+R}$ qui suivent l'instant $t_i$ auquel est codée l'image courante $I_C$.

Préalablement à l'étape de prédiction C4 ou D5, il est procédé :

- à la sélection, dans la première pluralité R de champs de vecteurs de mouvement denses $C_{C,L0,1}$, $C_{C,L0,2}$,....,$C_{C,L0,R}$ contenue dans la liste de prédicteurs candidats, d'un seul champ de vecteurs de mouvement, noté $C_{C,L0,q}$, avec $1{\leq}q{\leq}R$,
- à la sélection, dans la deuxième pluralité R de champs de vecteurs de mouvement denses $C_{C,L1,1}$, $C_{C,L1,2}$,....,$C_{C,L1,R}$ contenue dans la liste de prédicteurs candidats, d'un seul champ de vecteurs de mouvement, noté $C_{C,L1,q}$, avec $1{\leq}q{\leq}R$.

Une telle sélection est par exemple mise en œuvre à l'aide d'une fonction mathématique ou statistique dont des exemples ont été cités plus haut dans la description.

Au cours de l'étape C4 ou D5 précitée, il est procédé à la prédiction des pixels ou du mouvement du groupe $GP_C$ de seize pixels courant à partir des deux champs de vecteurs de mouvement $C_{C,L0,q}$ et $C_{C,L1,q}$ sélectionnés.

La prédiction du groupe $GP_C$ de seize pixels courant est donc mise en œuvre par rapport :

- au champ $C_{C,L0,q}$, les vecteurs de ce champ pointant sur une image de référence,
- au champ $C_{C,L1,q}$, les vecteurs de ce champ pointant sur une autre image de référence.

L'exemple illustré sur la **figure 5G** diffère de l'exemple de la **figure 5F** par le fait que le calcul d'une première pluralité R de champs de vecteurs de mouvement denses $C_{C,L0,1}$, $C_{C,L0,2}$,....,$C_{C,L0,R}$ et d'une deuxième pluralité R de champs de vecteurs de mouvement denses $C_{C,L1,1}$, $C_{C,L1,2}$,....,$C_{C,L1,R}$, est effectué, non plus par rapport à un unique groupe de pixels $GP_R$, mais par rapport à une pluralité V de groupes de pixels $GP_{R1}$, $GP_{R2}$,..., $GP_{Rz}$,...,$GP_{RV}$, avec $1{<}z{\leq}V$. Ces derniers sont déterminés, au cours de l'étape C2 ou D3 précitée, comme V groupes de seize pixels correspondant respectivement, dans V premières images $IR_{1,1}$, $IR_{1,2}$,..., $IR_{1,z}$,...$IR_{1,V}$, au groupe de pixels courant $GP_C$.

Au cours de l'étape C3 ou D4 précitée, il est procédé au calcul :

- s'agissant de la première image $IR_{1,1}$, d'une première pluralité R de champs de vecteurs de mouvement denses $C_{C,L0,1[1]}$, $C_{C,L0,2[1]}$,....,$C_{C,L0,R[1]}$ et d'une deuxième pluralité R de champs de vecteurs de mouvement denses $C_{C,L1,1[1]}$, $C_{C,L1,2[1]}$,....,$C_{C,L1,R[1]}$, chaque champ de vecteurs de mouvement contenant seize vecteurs de mouvement,
- .....,
- s'agissant de la première image $IR_{1,z}$, d'une première pluralité R de champs de vecteurs de mouvement denses $C_{C,L0,1[z]}$, $C_{C,L0,2[z]}$,....,$C_{C,L0,R[z]}$ et d'une deuxième pluralité R de champs de vecteurs de mouvement denses $C_{C,L1,1[z]}$, $C_{C,L1,2[z]}$,....,$C_{C,L1,R[z]}$, chaque champ de vecteurs de mouvement contenant seize vecteurs de mouvement,
- ...,
- s'agissant de la première image $IR_{1,V}$, d'une première pluralité R de champs de vecteurs de mouvement denses $C_{C,L0,1[V]}$, $C_{C,L0,2[V]}$,....,$C_{C,L0,R[V]}$ et d'une deuxième pluralité R de champs de vecteurs de mouvement denses $C_{C,L1,1[V]}$, $C_{C,L1,2[V]}$,....,$C_{C,L1,R[V]}$, chaque champ de vecteurs de mouvement contenant seize vecteurs de mouvement.

Préalablement à l'étape de prédiction C4 ou D5, il est procédé à la sélection de deux champs de vecteurs de mouvement, à partir de ladite liste de prédicteurs candidats.

Selon une première option, une fonction mathématique ou statistique du type précité est appliquée :

- sur l'ensemble des premières pluralités de champs de vecteurs de mouvement $C_{C,L0,1[1]}$, $C_{C,L0,2[1]}$,....,$C_{C,L0,R[1]}$, ..., $C_{C,L0,1[z]}$, $C_{C,L0,2[z]}$,....,$C_{C,L0,R[z]}$,..., $C_{C,L0,1[V]}$, $C_{C,L0,2[V]}$,....,$C_{C,L0,R[V]}$, de façon à sélectionner un seul champ de vecteurs de mouvement. noté $C_{C,L0,sel}$.
- sur l'ensemble des deuxièmes pluralités de champs de vecteurs de mouvement $C_{C,L1,1[1]}$, $C_{C,L1,2[1]}$,....,$C_{C,L1,R[1]}$,..., $C_{C,L1,1[z]}$, $C_{C,L1,2[z]}$,....,$C_{C,L1,R[z]}$,..., $C_{C,L1,1[V]}$, $C_{C,L1,2[V]}$,....,$C_{C,L1,R[V]}$, de façon à sélectionner un seul champ de vecteurs de mouvement. noté $C_{C,L1,sel}$.

Au cours de l'étape C4 ou D5 précitée, il est procédé à la prédiction des pixels ou du mouvement du groupe $GP_C$ de seize pixels courant à partir des deux champs de vecteurs de mouvement $C_{C,L0,sel}$ et $C_{C,L1,sel}$ sélectionnés.

La prédiction des pixels ou du mouvement du groupe $GP_C$ de seize pixels courant est donc mise en œuvre par rapport :

- au champ $C_{C,L0,sel}$, les vecteurs de ce champ pointant sur une image de référence,
- au champ $C_{C,L1,sel}$, les vecteurs de ce champ pointant sur une autre image de référence.

Selon une deuxième option :

- en relation avec la première image $IR_{1,1}$, une fonction mathématique ou statistique du type précité et notée $f_1$ est appliquée sur la première pluralité R de champs de vecteurs de mouvement denses $C_{C,L0,1[1]}$, $C_{C,L0,2[1]}$,....,$C_{C,L0,R[1]}$ et sur la deuxième pluralité R de champs de vecteurs de mouvement denses $C_{C,L1,1[1]}$, $C_{C,L1,2[1]}$,....,$C_{C,L1,R[1]}$, de façon à sélectionner respectivement un premier champ de vecteurs de mouvement. noté $C_{C,L0,sel[1]}$ et un deuxième champ de vecteurs de mouvement. noté $C_{C,L1,sel[1]}$,

- .....,

- en relation avec la première image $IR_{1,z}$, une fonction mathématique ou statistique du type précité et notée $f_z$ est appliquée sur la première pluralité R de champs de vecteurs de mouvement denses $C_{C,L0,1[z]}$, $C_{C,L0,2[z]}$,....,$C_{C,L0,R[z]}$ et sur la deuxième pluralité R de champs de vecteurs de mouvement denses $C_{C,L1,1[z]}$, $C_{C,L1,2[z]}$,....,$C_{C,L1,R[z]}$, de façon à sélectionner respectivement un premier champ de vecteurs de mouvement. noté $C_{C,L0,sel[z]}$ et un deuxième champ de vecteurs de mouvement noté $C_{C,L1,sel[z]}$,

- ...,

- en relation avec la dernière image $IR_{1,V}$ des premières images, une fonction mathématique ou statistique du type précité et notée $f_V$ est appliquée sur la première pluralité R de champs de vecteurs de mouvement denses $C_{C,L0,1[V]}$, $C_{C,L0,2[V]}$,....,$C_{C,L0,R[V]}$ et sur la deuxième pluralité R de champs de vecteurs de mouvement denses $C_{C,L1,1[V]}$, $C_{C,L1,2[V]}$,....,$C_{C,L1,R[V]}$, de façon à sélectionner respectivement un premier champ de vecteurs de mouvement. noté $C_{C,L0,sel[V]}$ et un deuxième champ de vecteurs de mouvement noté $C_{C,L1,Sel[V]}$.

Une fonction mathématique ou statistique du type précité, notée $F_M$, est ensuite appliquée sur l'ensemble des champs de vecteurs de mouvement sélectionnés $C_{C,L0,sel[1]}$,..., $C_{C,L0,sel[z]}$,..., $C_{C,L0,sel[V]}$ d'une part, et $C_{C,L1,sel[1]}$,..., $C_{C,L1,sel[z]}$,..., $C_{C,L1,sel[V]}$, d'autre part, de façon à obtenir deux champs de vecteurs de mouvement $C_{c,L0,sel}$ et $C_{c,L1,sel}$.

Au cours de l'étape C4 ou D5 précitée, il est procédé à la prédiction des pixels ou du mouvement du groupe $GP_C$ de seize pixels courant à partir des deux champs de vecteurs de mouvement $C_{c,L0,sel}$ et $C_{c,L1,sel}$ qui ont été sélectionnés.

Selon un exemple associé à cette deuxième option, les fonctions $f_1$, $f_2$,...,$f_z$,...$f_V$ sont des médians et la fonction $f_M$ est une moyenne.

La fonction $f_M$ peut par ailleurs être une moyenne pondérée. Dans ce cas, pour chacune des V premières images $IR_{1,1}$, $IR_{1,2}$,..., $IR_{1,z}$,...$IR_{1,V}$, un coefficient de poids plus ou moins élevé est affecté à chacun des champs de vecteurs de mouvement sélectionnés $C_{C,L0,sel[1]}$,..., $C_{C,L0,sel[z]}$,..., $C_{C,L0,sel[V]}$ et $C_{C,L1,sel[1]}$,..., $C_{C,L1,sel[z]}$,..., $C_{C,L1,sel[V]}$, en fonction de la fiabilité respectivement plus ou moins élevée du codage/décodage des V premières images $IR_{1,1}$, $IR_{1,2}$,..., $IR_{1,z}$,...$IR_{1,V}$. Une telle disposition permet d'obtenir une prédiction beaucoup plus précise du groupe $GP_C$ de k pixels courant.

Selon une troisième option :

- en relation avec l'ensemble des deuxièmes images $IR_{2,i-1[1]}$, ..., $IR_{2,i-1[z]}$,..., $IR_{2,i-1[V]}$ situées à l'instant $t_{i-1}$ et l'ensemble des deuxièmes images $IR_{2,i+1[1]}$, -..., $IR_{2,i+1[z]}$,..., $IR_{2,i+1[V]}$ situées à l'instant $t_{i+1}$, une fonction mathématique ou statistique du type précité et notée $f'_1$ est appliquée sur :

  • la pluralité V de champs de vecteurs de mouvement denses $C_{C,L0,1[1]}$, ...,$C_{C,L0,1[z]}$,...,$C_{C,L0,1[V]}$,
  • et sur la pluralité V de champs de vecteurs de mouvement denses $C_{C,L1,1[1]}$, ...,$C_{C,L1,1[z]}$,...,$C_{C,L1,1[V]}$, de façon à sélectionner respectivement deux champs de vecteurs de mouvement, notés $C'_{C,L0,sel[1]}$ et $C'_{C,L1,sel[1]}$,

- en relation avec l'ensemble des deuxièmes images $IR_{2,i-2[1]}$,-..., $IR_{2,i-2[z]}$,..., $IR_{2,i-2[V]}$ situées à l'instant $t_{i-2}$ et l'ensemble des deuxièmes images $IR_{2,i+2[1]}$, -..., $IR_{2,i+2[z]}$,..., $IR_{2,i+2[V]}$ situées à l'instant $t_{i+2}$, une fonction mathématique ou statistique du type précité et notée $f'_2$ est appliquée sur :

  • la pluralité V de champs de vecteurs de mouvement denses $C_{C,L0,2[1]}$, -..., $C_{C,L0,2[z]}$,...,$C_{C,L0,2[V]}$,
  • et sur la pluralité V de champs de vecteurs de mouvement denses $C_{C,L1,2[1]}$, ...,$C_{C,L1,2[z]}$,...,$C_{C,L1,2[V]}$, de façon à sélectionner respectivement deux champs de vecteurs de mouvement, notés $C'_{C,L0,sel[2]}$ et $C'_{C,L1,sel[2]}$,

- .....,

- en relation avec l'ensemble des deuxièmes images $IR_{2,i-R[1]}$, -..., $IR_{2,i-R[z]}$,..., $IR_{2,i-R[V]}$ situées à l'instant $t_{i-R}$ et l'ensemble des deuxièmes images $IR_{2,i+R[1]}$, -..., $IR_{2,i+R[z]}$,..., $IR_{2,i+R[V]}$ situées à l'instant $t_{i+R}$, une fonction mathématique ou statistique du type précité et notée $f'_R$ est appliquée sur :

  • la pluralité V de champs de vecteurs de mouvement denses $C_{C,L0,R[1]}$, ...,$C_{C,L0,R[z]}$,...,$C_{C,L0,R[V]}$,
  • et sur la pluralité V de champs de vecteurs de mouvement denses $C_{C,L1,R[1]}$, ...,$C_{C,L1,R[z]}$,...,$C_{C,L1,R[V]}$, de façon à sélectionner respectivement deux champs de vecteurs de mouvement, notés $C'_{C,L0,sel[R]}$ et $C'_{C,L1,sel[R]}$.

Une fonction mathématique ou statistique du type précité, notée $F'_M$, est ensuite appliquée sur l'ensemble des champs de vecteurs de mouvement sélectionnés $C'_{C,L0,sel[1]}$, $C'_{C,L0,sel[2]}$, -..., $C'_{C,L0,sel[R]}$, d'une part, et $C'_{C,L1,sel[1]}$, $C'_{C,L1,sel[2]}$, -..., $C'_{C}L1_{,sel[R]}$, d'autre part, de façon à obtenir deux champs de vecteurs de mouvement $C'_{c,L0,sel}$ et $C'_{C,L1,sel}$.

Au cours de l'étape C4 ou D5 précitée, il est procédé à la prédiction des pixels ou du mouvement du groupe $GP_C$ de seize pixels courant à partir des champs $C'_{C,L0,sel}$ et $C'_{C1,L1,sel}$ de seize vecteurs de mouvement qui ont été sélectionnés.

Selon un exemple associé à cette deuxième option, les fonctions $f'_1$, $f'_2$,..., $f'_R$ sont des médians et la fonction $f'_M$ est une moyenne.

La fonction $f'_M$ peut par ailleurs être une moyenne pondérée. Dans ce cas, pour chacun des R ensembles précités de deuxièmes images, un coefficient de poids plus ou moins élevé est affecté à chacun des champs de vecteurs de mouvement sélectionnés $C'_{C,L0,sel[1]}$, $C'_{C,L0,sel[2]}$, ..., $C'_{C,L0,sel[R]}$ et $C'_{C,L1,sel[1]}$, $C'_{C,L1,sel[2]}$, -..., $C'_{C}L1_{,sel[R]}$ en fonction de la fiabilité respectivement plus ou moins élevée du codage/décodage des R ensembles de deuxièmes images correspondants. Ainsi, pour une première image considérée, $IR_{1,z}$ par exemple, plus la distance temporelle entre $IR_{1,z}$ d'une part, et $IR_{2,i-1[z]}$ (respectivement $IR_{2,i+1,z}$),...,$IR_{2,i-R[z]}$ (respectivement $IR_{2,i+R[z]}$) augmente, moins l'estimation du champ de vecteurs de mouvement est fiable. Les coefficients de poids les plus faibles seront donc affectés aux champs de vecteurs de mouvement qui pointent vers des images ayant les plus grandes distances temporelles avec l'image $IR_{1,z}$. Une telle disposition permet d'obtenir une prédiction des pixels ou du mouvement du groupe $GP_C$ de k pixels courant qui est beaucoup plus précise.

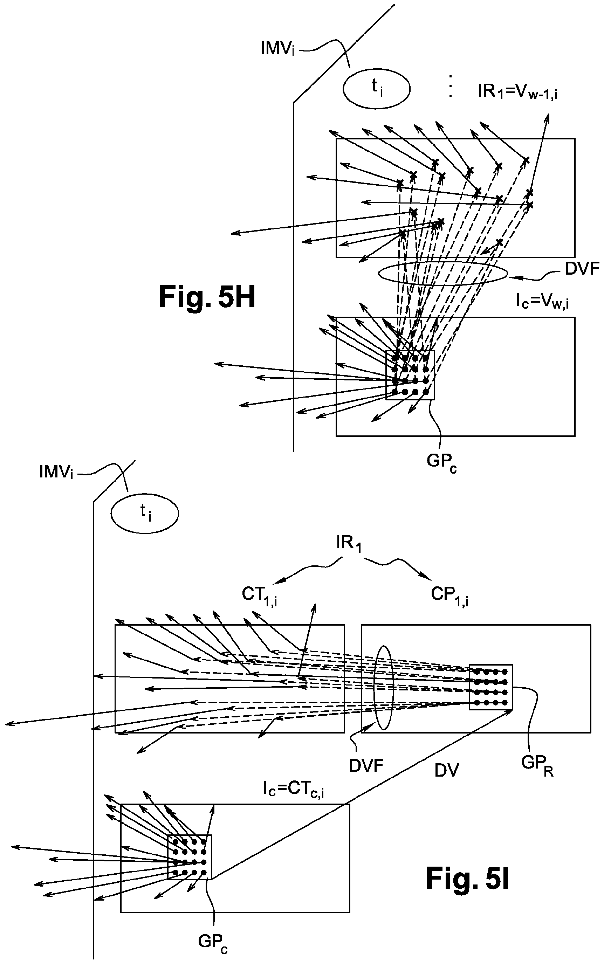

Dans l'exemple illustré sur la **figure 5H,** le codage vidéo est de type 3D et chaque image à coder dans la séquence d'images SI est une image multi-vues qui peut être par exemple au format MVV ou MVD. A un instant courant $t_i$, une image multi-vues $IMV_i$ comprend T vues $V_{1,i}$, $V_{2,i}$,..., $V_{w,i}$...$V_{T,i}$ où $1 \le w \le T$, chacune de ces vues représentant une même scène selon respectivement T points de vues différents.

Sur la **figure 5H** :

- l'image courante $I_C$ est une vue courante $V_{w,i}$ située à l'instant courant $t_i$ dans l'image multi-vues $IMV_i$ courante,
- la première image $IR_1$ est une vue $V_{w-1,i}$ située à l'instant $t_i$, ladite vue étant située immédiatement au-dessus de la vue courante $V_{w,i}$ dans l'image multi-vues $IMV_i$ courante et ayant déjà été codée puis décodée,
- la deuxième image $IR_2$ non représentée est par exemple identique à celle représentée sur la **figure 5C,** c'est à dire une vue $V_{w-1,i-1}$ d'une image multi-vues $IMV_{i-1}$ qui est située à un instant $t_{i-1}$ précédant immédiatement l'instant courant $t_i$,

- la troisième image $IR_3$ non représentée est par exemple identique à celle représentée sur la **figure 5C,** c'est à dire une vue $V_{w,i-1}$ de l'image multi-vues $IMV_{i-1}$ qui est située à un instant $t_{i-1}$ précédant immédiatement l'instant courant $t_i$.

Au cours de l'étape C2 ou D3 précitée, le groupe $GP_R$ de seize pixels correspondant, dans la première image $IR_1$, aux seize pixels du groupe de pixels courant $GP_C$ de l'image courante $I_C$, est déterminé au moyen d'un champ DVF de vecteurs de disparité entre l'image courante $I_C$ et la première image $IR_1$. Le champ DVF comprend seize vecteurs de disparité représentés en pointillé sur la **figure 5H.** Les seize pixels pointés respectivement par ces seize vecteurs constituent ledit groupe $GP_R$. Un tel champ DVF est dense puisque les seize pixels du groupe $GP_R$ ne sont pas forcément contigus.

Les étapes C3 ou D4 de calcul de champ de vecteur de mouvement précitées, ainsi que les étapes C4 ou D5 de prédiction des pixels ou du mouvement du groupe $GP_C$ de pixels courant précitées sont par exemple effectuées de la même façon que dans le mode de réalisation représenté sur la **figure 5C.**

Dans l'exemple illustré sur la **figure 5I,** le codage vidéo est de type 3D et chaque image à coder dans la séquence d'images SI est par exemple au format MVD, où les composantes de texture sont codées avant les composantes de profondeur.

Sur la **figure 5I** :

- l'image courante $I_C$ est par exemple une première composante de texture courante $CT_{C,i}$ située à l'instant courant $t_i$ dans l'image multi-vues $IMV_i$ courante,
- la première image $IR_1$ comprend :

  • une composante de texture $CT_{1,i}$ située à l'instant courant $t_i$ dans l'image multi-vues $IMV_i$ courante,
  • une composante de profondeur $CP_{1,i}$ qui, à l'instant courant $t_i$, est associée à la composante de texture $CT_{1,i}$ dans l'image multi-vues $IMV_i$,

- la troisième image $IR_3$ non représentée comprend par exemple une composante de texture $CT_{3,i-1}$ et une composante de profondeur $CP_{3,i-1}$ qui sont situées à un instant $t_{i-1}$ dans une image multi-vues $IMV_{i-1}$ non représentée précédant immédiatement l'image multi-vues $IMV_i$.

Au cours de l'étape C2 ou D3 précitée, le groupe $GP_R$ de seize pixels correspondant, dans la composante de profondeur $CP_{1,i}$ de la première image $IR_1$, au groupe de pixels courant $GP_C$ de l'image courante $I_C$, est déterminé classiquement par un unique vecteur de disparité DV.

Compte tenu du fait que le format des images de la séquence SI est de type MVD, les seize pixels du groupe $GP_R$ sont associés respectivement à seize vecteurs de disparité représentés en pointillé sur la **figure 5I** et pointant sur la composante de texture $CT_{1,i}$ de la première image $IR_1$. Ces seize vecteurs de disparité forment un champ de vecteurs de disparité dense DVF.

Au cours de l'étape C3 ou D4 précitée, il est procédé au calcul du champ dense $C_C$ de seize vecteurs de mouvement associés à chacun des seize pixels de la composante de texture $CT_{1,i}$ pointé par un vecteur de disparité du champ DVF. Le champ dense $C_C$ contient seize vecteurs de mouvement qui sont représentés par des flèches en trait plein sur la **figure 5I.**

Au cours de l'étape C4 ou D5 précitée, il est procédé à la prédiction des pixels ou du mouvement du groupe $GP_C$ de seize pixels courant à partir du champ $C_C$ de seize vecteurs de mouvement calculé à l'étape C3 ou D4, par rapport à ladite troisième image $IR_3$.

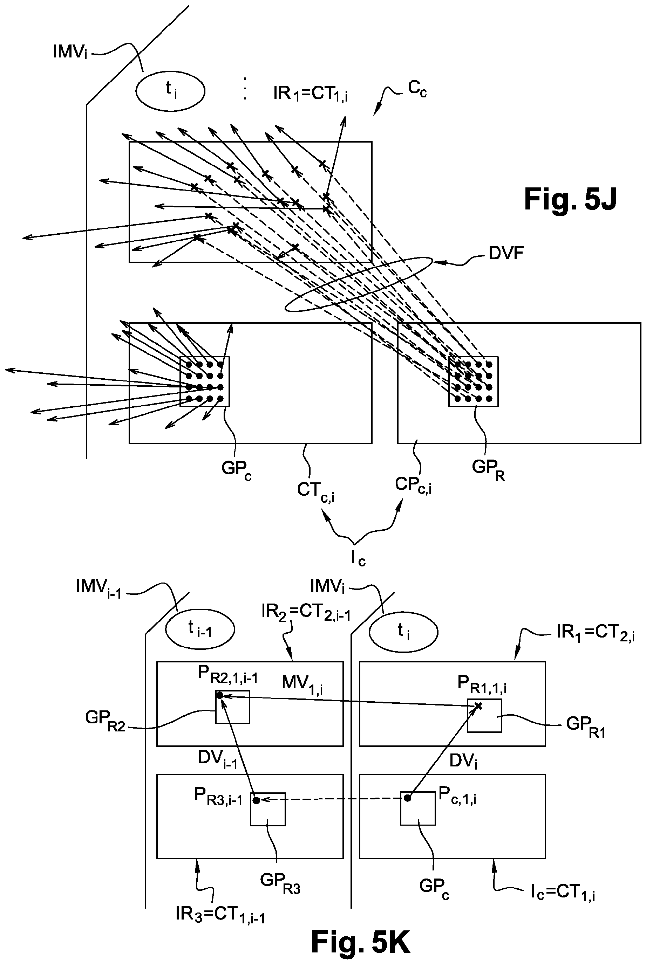

Dans l'exemple illustré sur la **figure 5J,** le codage vidéo est de type 3D et chaque image à coder dans la séquence d'images SI est par exemple au format MVD où les composantes de profondeur sont codées avant les composantes de texture.

Sur la **figure 5J** :

- l'image courante $I_C$ comprend

  • une composante de texture $CT_{C,i}$ située à l'instant courant $t_i$ dans l'image multi-vues $IMV_i$ courante,
  • une composante de profondeur $CP_{C,i}$ qui, à l'instant courant $t_i$, est associée à la composante de texture $CT_{1,i}$ dans l'image multi-vues $IMV_i$,

- la première image $IR_1$ est une composante de texture $CT_{1,i}$ dans l'image multi-vues $IMV_i$, à l'instant courant $t_i$.

Au cours de l'étape C2 ou D3 précitée, il est procédé à la recherche du groupe $GP_R$ de seize pixels co-localisé dans la composante de profondeur $CP_{C,i}$.

Compte tenu du fait que le format des images de la séquence SI est de type MVD, les seize pixels du groupe $GP_R$ sont associés respectivement à seize vecteurs de disparité représentés en pointillé sur la **figure 5J** et pointant sur la composante de texture $CT_{1,i}$ de la première image $IR_1$. Ces seize vecteurs de disparité forment un champ DVF de vecteurs de disparité dense.

Au cours de l'étape C3 ou D4 précitée, il est procédé au calcul du champ dense $C_C$ de seize vecteurs de mouvement associés à chacun des seize pixels de l'image $IR_1$ pointé par un vecteur de disparité du champ DVF. Le champ dense $C_C$ contient seize vecteurs de mouvement qui sont représentés par des flèches en trait plein sur la **figure 5J.**

Au cours de l'étape C4 ou D5 précitée, il est procédé à la prédiction des pixels ou du mouvement du groupe $GP_C$ de seize pixels courant par héritage du champ $C_C$ de seize vecteurs de mouvement calculé à l'étape C3 ou D4, par rapport à une image de référence non représentée.

Dans l'exemple illustré sur la **figure 5K,** le codage vidéo est de type 3D et chaque image à coder dans la séquence d'images SI est une image multi-vues au format MVD. A un instant courant $t_i$, une image multi-vues $IMV_i$ comprend T vues $V_{1,i}, V_{2,i},..., V_{w,i},...V_{T,i}$ où $1 \leq w \leq T$, chacune de ces vues représentant une même scène selon respectivement T points de vues différents.

Sur la **figure 5K :**

- l'image courante $I_C$ est une première composante de texture $CT_{1,i}$ située à l'instant courant $t_i$ dans l'image multi-vues $IMV_i$ courante,
- la première image $IR_1$ est une deuxième composante de texture $CT_{2,i}$ située à l'instant courant $t_i$ dans l'image multi-vues $IMV_i$ courante,
- la deuxième image $IR_2$ est une troisième composante de texture $CT_{2,i-1}$ d'une image multi-vues $IMV_{i-1}$ qui est située à un instant $t_{i-1}$ précédant immédiatement l'instant courant $t_i$,
- la troisième image $IR_3$ est une quatrième composante de texture $CT_{1,i-1}$ de l'image multi-vues $IMV_{i-1}$.

Au cours de l'étape C2 ou D3 précitée, un groupe de seize pixels de profondeur correspondant au groupe de pixels courant $GP_C$ de l'image courante $I_C$ est déterminé classiquement, par exemple selon l'une des méthodes représentées à la **figure 5I** ou **5J**. Un seul vecteur de disparité $DV_i$ obtenu selon l'une de ces méthodes est représenté sur la **figure 5K**. Ce vecteur de disparité est déterminé entre la composante de profondeur (non représentée) associée à la composante de texture $CT_{1,i}$ de l'image courante $I_C$ et la composante de profondeur (non représentée) associée à la composante de texture $CT_{2,i}$ de la première image $IR_1$.

Compte tenu du fait que le format des images de la séquence SI est de type MVD, les seize pixels du groupe de ladite composante de profondeur sont associés respectivement à seize vecteurs de disparité (non représentés) pointant sur la composante de texture $CT_{2,i}$. Ces seize vecteurs de disparité forment un champ dense de vecteurs de disparité qui pointe sur un groupe $GP_{R1}$ de seize pixels de la composante de texture $CT_{2,i}$ et dont l'origine est le groupe de pixels $GP_C$ de la composante de texture $CT_{2,i}$ comme illustré sur la **figure 5K**.

Pour des raisons de simplification de la **figure 5K**, un seul pixel est représenté par groupe. Il s'agit du premier pixel $p_{c,i}$ pour le groupe de pixels courant $GP_C$ et du premier pixel $p_{R1,1,i}$ pour le groupe de pixels $GP_R$ de référence.

Il est ensuite procédé au calcul d'un vecteur de mouvement $MV_{1,i}$ qui décrit le mouvement du premier pixel $p_{R1,1,i}$ du groupe de pixels $GP_{R1}$ de la composante de texture $CT_{2,i}$ et d'un premier pixel $P_{R2,1,i-1}$ correspondant au pixel $p_{R1,1,i}$ dans un groupe $GP_{R2}$ de pixels de la composante de texture $CT_{2,i-1}$. Pour des raisons de simplification de la **figure 5K**, seul, le premier pixel du groupe $GP_{R2}$ de pixels qui en contient seize est représenté.

Cette étape de calcul est réitérée pour calculer les quinze vecteurs de mouvement associés respectivement aux quinze pixels non représentés du groupe de pixels $GP_{R1}$. Un champ de vecteurs de mouvement est alors obtenu, lequel pointe sur le groupe $GP_{R2}$. Les seize pixels du groupe $GP_{R2}$ sont respectivement associés à seize vecteurs de mouvement qui forment un champ dense de vecteurs de mouvement $C_{R2,i-1}$. Ledit champ de vecteurs de mouvement obtenu est par exemple ajouté à la liste précitée de prédicteurs candidats.

Au cours d'une nouvelle étape similaire à l'étape C2 ou D3 précitée, un groupe de seize pixels de profondeur correspondant au groupe de pixels $GP_{R2}$ de la composante de texture $CT_{2,i-1}$, est déterminé classiquement, par exemple selon l'une des méthodes représentées à la **figure 5I** ou **5J**. Au moins un vecteur de disparité $DV_{i-1}$ obtenu selon l'une de ces méthodes est représenté sur la **figure 5K**.

Compte tenu du fait que le format des images de la séquence SI est de type MVD, les seize pixels du groupe de ladite composante de profondeur sont associés respectivement à seize vecteurs de disparité (non représentés) pointant sur la composante de texture $CT_{2,i-1}$. Ces seize vecteurs de disparité forment un champ de vecteurs de disparité dont l'origine est un groupe de pixels $GP_{R3}$ de seize pixels de la composante de texture $CT_{1,i-1}$.

Au cours de l'étape C3 ou D4 précitée, il est procédé au calcul du premier vecteur de mouvement $MV_{C,1}$ composant un champ dense courant $C_{C1}$ de vecteurs de mouvement, entre le premier pixel courant $P_{C,1,i}$ du groupe de pixels courant $GP_C$ de la composante de texture $CT_{1,i}$ et le premier pixel correspondant $P_{R3,1,i-1}$ du groupe de pixels $GP_{R3}$ de la composante de texture $CT_{1,i-1}$. Le vecteur de mouvement $MV_{C,1}$ est représenté en pointillé sur la **figure 5K**.

A cet effet, un tel calcul est effectué conformément aux règles de géométrie épipolaire de la façon suivante, où la valeur du vecteur de mouvement $MV_{C,1}$ est l'inconnue représentée en caractères gras :

$$P_{c1,i} + DV_i(P_{c1,i}) + MV_{1,i}(P_{c1,i} + DV_i(P_{c1,i})) = P_{c1,i} + \mathbf{MV_{c,1}}(pc1,i) + DV_{i-1}(P_{c1,i} + \mathbf{MV_{c,1}}(pc1,i)).$$

L'étape C3 ou D4 est réitérée pour calculer les quinze autres vecteurs de mouvement associés respectivement au quinze autres pixels non représentés du groupe de pixels courant $GP_C$.

A la suite de l'étape C3 ou D4, le champ dense $C_{C1}$ de vecteurs de mouvement, composé des seize vecteurs de mouvement calculés, est alors obtenu. Ledit champ $C_{C1}$ est par exemple ajouté à la liste précitée de prédicteurs candidats.

Au cours de l'étape C4 ou D5 précitée, il est procédé à la prédiction des pixels ou du mouvement du groupe $GP_C$ de seize pixels courant au moyen du champ dense $C_{C1}$ de vecteurs de mouvement, par rapport à la composante de texture $CT_{1,i-1}$.

Il convient de noter qu'un tel champ dense $C_C$ de vecteurs de mouvement peut contenir des trous, du fait que les pixels du groupe $GP_{R2}$ ne sont pas tous pointés par un vecteur de disparité $DV_{i-1}$. Toutefois, le mode de réalisation de la **figure 5K** est particulièrement avantageux dans le sens où il permet de compenser les déformations de l'image qui sont provoquées par le fait que le mouvement d'un objet filmé d'une caméra de prise de vue à l'autre, n'est pas exactement le même en raison de la disposition différente des caméras de prise de vue.

Par ailleurs, afin d'améliorer la prédiction du groupe de pixels courant, le mode de réalisation représenté sur la **figure 5K** peut être combiné avec le mode de réalisation représenté sur la **figure 5J**.

L'invention est définie par les revendications annexées.

**Revendications**

1. Procédé de codage d'une image courante ($I_C$), l'image courante ($I_C$) étant une vue courante ($V_{w,i}$) située à un instant courant (ti) dans une image multi-vues ($IMV_i$) courante, le procédé comprenant une étape (C2) de détermination, dans une première image ($IR_1$) différente de l'image courante, d'un groupe de k pixels correspondant à un groupe de k pixels courant à coder de l'image courante ($I_C$), ledit procédé de codage étant **caractérisé en ce qu'**il comprend les étapes suivantes :

   - calcul (C3) d'un vecteur de mouvement entre chacun des k pixels de la première image ($IR_1$) et un pixel correspondant d'une deuxième image ($IR_2$) différente de l'image courante, à l'issue duquel un champ de k vecteurs de mouvement est obtenu,
   - prédiction (C4) des pixels du groupe de k pixels courant de ladite image courante ($I_C$) à partir du champ de k vecteurs de mouvement obtenu, ladite étape de prédiction consistant à prédire les k pixels dudit groupe de pixels courant par des pixels correspondants d'une troisième image ($IR_3$) différente de ladite image courante ($I_C$), lesdits pixels correspondants étant pointés respectivement par les k vecteurs de mouvement dudit champ de vecteurs de mouvement obtenu,
   les premières et deuxièmes images ($IR_1$, $IR_2$) étant des images de référence déjà codées puis décodées appartenant à une vue différente de la vue à laquelle appartient l'image courante,
   la troisième image ($IR_3$) étant une image de référence déjà codée puis décodée appartenant à la même vue que l'image courante.

2. Procédé de codage selon la revendication 1, ledit procédé de codage comprenant en outre les étapes suivantes :

   - obtention d'un groupe de pixels résiduel courant par calcul de la différence entre le groupe de k pixels courant et le groupe de pixels prédicteur obtenu à l'issue de l'étape de prédiction,
   - élaboration d'un flux de données contenant le groupe de pixels résiduel courant obtenu.

3. Procédé de codage selon l'une quelconque des revendications 1 à 2, dans lequel :

   - ladite étape de calcul consiste à calculer une pluralité de champs de vecteurs de mouvement entre, d'une part, des pixels d'une pluralité de premières images et, d'autre part, des pixels correspondant dans une pluralité de deuxièmes images différentes de l'image courante,

ledit procédé comprenant en outre une étape de sélection d'un champ de vecteurs de mouvement parmi les champs de vecteurs de mouvement calculés, au moyen d'une fonction mathématique ou statistique,
- ladite étape de prédiction consistant à prédire le mouvement ou les pixels du groupe de pixels courant à partir du champ de vecteurs de mouvement sélectionné.

**4.** Dispositif (CO) de codage d'une image courante ($I_C$), l'image courante ($I_C$) étant une vue courante ($V_{w,i}$) située à l'instant courant (ti) dans une image multi-vues ($IMV_i$) courante, le procédé le dispositif comprenant des moyens (CAL1_CO) de détermination, dans une première image ($IR_1$) différente de l'image courante, d'un groupe de k pixels correspondant à un groupe de k pixels courant à coder de l'image courante ($I_C$), ledit dispositif étant adapté pour mettre en œuvre le procédé de codage selon l'une quelconque des revendications 1 à 3, **caractérisé en ce qu'**il comprend :

- des moyens (CAL2_CO) de calcul d'un vecteur de mouvement entre chacun des k pixels de la première image ($IR_1$) et un pixel correspondant d'une deuxième image ($IR_2$) différente de l'image courante, pour obtenir un champ de k vecteurs de mouvement,
- des moyens (PRED_CO) de prédiction des pixels du groupe de k pixels courant de ladite image courante ($I_C$) à partir du champ de k vecteurs de mouvement obtenu, ladite étape de prédiction consistant à prédire les k pixels dudit groupe de pixels courant par des pixels correspondants d'une troisième image ($IR_3$) différente de ladite image courante ($I_C$), lesdits pixels correspondants étant pointés respectivement par les k vecteurs de mouvement dudit champ de vecteurs de mouvement obtenu, les premières et deuxièmes images ($IR_1$, $IR_2$) étant des images de référence déjà codées puis décodées appartenant à une vue différente de la vue à laquelle appartient l'image courante,
la troisième image ($IR_3$) étant une image de référence déjà codée puis décodée appartenant à la même vue que l'image courante.

**5.** Programme d'ordinateur comportant des instructions de code de programme pour l'exécution des étapes du procédé de codage selon l'une quelconque des revendications 1 à 3, lorsque ledit programme est exécuté sur un ordinateur.

**6.** Procédé de décodage d'un flux de données représentatif d'une image codée courante ($I_C$), l'image courante ($I_C$) étant une vue courante ($V_{w,i}$) située à l'instant courant (ti) dans une image multi-vues ($IMV_i$) courante, le procédé le dispositif, le procédé comprenant une étape (D3) de détermination, dans une première image ($IR_1$) différente de l'image courante, d'un groupe de k pixels correspondant à un groupe de k pixels courant à décoder de l'image courante ($I_C$),
ledit procédé de décodage étant **caractérisé en ce qu'**il comprend les étapes suivantes :

- calcul (D4) de k vecteurs de mouvement entre chacun des k pixels de la première image ($IR_1$) et un pixel correspondant d'une deuxième image ($IR_2$) différente de l'image courante, à l'issue duquel un champ de k vecteurs de mouvement est obtenu,
- prédiction inverse (D5) des pixels du groupe de k pixels courant de ladite image courante ($I_C$) à partir du champ de k vecteurs de mouvement obtenu, ladite étape de prédiction consistant à prédire les k pixels dudit groupe de pixels courant par des pixels correspondants d'une troisième image ($IR_3$) différente de ladite image courante ($I_C$), lesdits pixels correspondants étant pointés respectivement par les k vecteurs de mouvement dudit champ de vecteurs de mouvement obtenu,
les premières et deuxièmes images ($IR_1$, $IR_2$) étant des images de référence déjà codées puis décodées appartenant à une vue différente de la vue à laquelle appartient l'image courante,
la troisième image ($IR_3$) étant une image de référence déjà codée puis décodée appartenant à la même vue que l'image courante.

**7.** Procédé de décodage selon la revendication 6, dans lequel ladite étape de prédiction inverse consiste à :

- déterminer (D1, D2), dans ledit flux de données, un groupe de pixels résiduel courant associé au groupe de k pixels courant,
- reconstruire (D5$_1$a)) les k pixels dudit groupe de pixels courant à partir dudit groupe de pixels résiduel courant (GPrc) déterminé.

**8.** Procédé de décodage selon l'une quelconque des revendications 6 à 7, dans lequel :

- ladite étape de calcul consiste à calculer une pluralité de champs de vecteurs de mouvement entre, d'une part, des pixels d'une pluralité de premières images et, d'autre part, des pixels correspondants dans une pluralité de deuxièmes images différentes de l'image courante, ledit procédé comprenant en outre une étape de sélection d'un champ de vecteurs de mouvement parmi les champs de vecteurs de mouvement calculés, au moyen d'une fonction mathématique ou statistique,
- ladite étape de prédiction inverse consistant à reconstruire les pixels du groupe de pixels courant à partir du champ de vecteurs de mouvement sélectionné.

9. Dispositif (DO) de décodage d'un flux de données représentatif d'une image courante ($I_C$), l'image courante ($I_C$) étant une vue courante ($V_{w,i}$) située à l'instant courant (ti) dans une image multi-vues ($IMV_i$) courante, le procédé le dispositif, le procédé comprenant des moyens (CAL1_DO) de détermination, dans une première image ($IR_1$) différente de l'image courante, d'un groupe de k pixels correspondant à un groupe de k pixels courant à décoder de l'image courante ($I_C$), ledit dispositif étant adapté pour mettre en œuvre le procédé de décodage selon l'une quelconque des revendications 6 à 8, **caractérisé en ce qu'**il comprend :

   - des moyens (CAL2_DO) de calcul d'un vecteur de mouvement entre chacun des k pixels de la première image ($IR_1$) et un pixel correspondant d'une deuxième image ($IR_2$) différente de l'image courante, pour obtenir un champ de k vecteurs de mouvement,
   - des moyens (PRED_DO) de prédiction inverse du groupe de k pixels courant de ladite image courante ($I_C$) à partir du champ de k vecteurs de mouvement obtenu, ladite étape de prédiction consistant à prédire les k pixels dudit groupe de pixels courant par des pixels correspondants d'une troisième image ($IR_3$) différente de ladite image courante ($I_C$), lesdits pixels correspondants étant pointés respectivement par les k vecteurs de mouvement dudit champ de vecteurs de mouvement obtenu,
   les premières et deuxièmes images ($IR_1$, $IR_2$) étant des images de référence déjà codées puis décodées appartenant à une vue différente de la vue à laquelle appartient l'image courante,
   la troisième image ($IR_3$) étant une image de référence déjà codée puis décodée appartenant à la même vue que l'image courante.

10. Programme d'ordinateur comportant des instructions de code de programme pour l'exécution des étapes du procédé de décodage selon l'une quelconque des revendications 6 à 8, lorsque ledit programme est exécuté sur un ordinateur.

**Patentansprüche**

1. Verfahren zur Codierung eines aktuellen Bilds (lc), wobei das aktuelle Bild (lc) eine aktuelle Ansicht ($V_{w,i}$) ist, die sich zu einem aktuellen Zeitpunkt (ti) in einem aktuellen Mehrfachansichtsbild ($IMV_i$) befindet, wobei das Verfahren einen Schritt (C2) des Bestimmens, in einem ersten Bild ($IR_1$), das sich vom aktuellen Bild unterscheidet, einer Gruppe von k Pixeln umfasst, die einer aktuellen Gruppe von k zu codierenden Pixeln des aktuellen Bilds (lc) entspricht, wobei das Verfahren **dadurch gekennzeichnet ist, dass** es die folgenden Schritte umfasst:

   - Berechnen (C3) eines Bewegungsvektors zwischen jedem der k Pixel des ersten Bilds ($IR_1$) und einem entsprechenden Pixel eines zweiten Bilds ($IR_2$), das sich vom aktuellen Bild unterscheidet, an dessen Ende ein Feld aus k Bewegungsvektoren erhalten ist,
   - Vorhersagen (C4) der Pixel der aktuellen Gruppe von k Pixeln des aktuellen Bilds (lc) ausgehend vom erhaltenen Feld aus k Bewegungsvektoren, wobei der Schritt des Vorhersagens darin besteht, die k Pixel der aktuellen Gruppe von Pixeln durch entsprechende Pixel eines dritten Bilds ($IR_3$) vorherzusagen, das sich vom aktuellen Bild (lc) unterscheidet, wobei von den k Bewegungsvektoren des erhaltenen Felds aus Bewegungsvektoren jeweils auf die entsprechenden Pixel verwiesen wird,
   wobei das erste und zweite Bild ($IR_1$, $IR_2$) bereits codierte, dann decodierte Referenzbilder sind, die zu einer Ansicht gehören, die sich von der Ansicht unterscheidet, zu welcher das aktuelle Bild gehört, wobei das dritte Bild ($IR_3$) ein bereits codiertes, dann decodiertes Referenzbild ist, das zur selben Ansicht wie das aktuelle Bild gehört.

2. Codierungsverfahren nach Anspruch 1, wobei das Codierungsverfahren ferner die folgenden Schritte umfasst:

   - Erhalten einer aktuellen Restgruppe von Pixeln durch Berechnung der Differenz zwischen der aktuellen Gruppe von k Pixeln und der Vorhersagegruppe von Pixeln, die am Ende des Schritts des Vorhersagens erhalten ist,
   - Erstellen eines Datenstroms, der die erhaltene aktuelle Restgruppe von Pixeln enthält.

3.  Codierungsverfahren nach einem der Ansprüche 1 bis 2, wobei:

    - wobei der Schritt des Berechnens darin besteht, eine Mehrzahl von Feldern aus Bewegungsvektoren zwischen einerseits Pixeln einer Mehrzahl von ersten Bildern und andererseits entsprechenden Pixeln in einer Mehrzahl von zweiten Bildern, die sich vom aktuellen Bild unterscheiden, zu berechnen,
    wobei das Verfahren ferner einen Schritt des Auswählens eines Felds aus Bewegungsvektoren aus den Feldern aus berechneten Bewegungsvektoren mittels einer mathematischen oder statistischen Funktion umfasst,
    - wobei der Schritt des Vorhersagens darin besteht, die Bewegung oder die Pixel der aktuellen Gruppe von Pixeln ausgehend vom ausgewählten Feld aus Bewegungsvektoren vorherzusagen.

4.  Vorrichtung (CO) zur Codierung eines aktuellen Bilds (lc), wobei das aktuelle Bild (lc) eine aktuelle Ansicht ($V_{w,i}$) ist, die sich zum aktuellen Zeitpunkt (ti) in einem aktuellen Mehrfachansichtsbild ($IMV_i$) befindet, wobei das Verfahren die Vorrichtung Mittel (CAL1_CO) zum Bestimmen, in einem ersten Bild ($IR_1$), das sich vom aktuellen Bild unterscheidet, einer Gruppe von k Pixeln umfasst, die einer aktuellen Gruppe von k zu codierenden Pixeln des aktuellen Bilds (lc) entspricht, wobei die Vorrichtung geeignet ist, das Codierungsverfahren nach einem der Ansprüche 1 bis 3 durchzuführen, **dadurch gekennzeichnet ist, dass** sie Folgendes umfasst:

    - Mittel (CAL2_CO) zum Berechnen eines Bewegungsvektors zwischen jedem der k Pixel des ersten Bilds ($IR_1$) und einem entsprechenden Pixel eines zweiten Bilds ($IR_2$), das sich vom aktuellen Bild unterscheidet, um ein Feld aus k Bewegungsvektoren zu erhalten,
    - Mittel (PRED_CO) zum Vorhersagen der Pixel der aktuellen Gruppe von k Pixeln des aktuellen Bilds (lc) ausgehend vom erhaltenen Feld aus k Bewegungsvektoren, wobei der Schritt des Vorhersagens darin besteht, die k Pixel der aktuellen Gruppe von Pixeln durch entsprechende Pixel eines dritten Bilds ($IR_3$) vorherzusagen, das sich vom aktuellen Bild (lc) unterscheidet, wobei von den k Bewegungsvektoren des erhaltenen Felds aus Bewegungsvektoren jeweils auf die entsprechenden Pixel verwiesen wird,
    wobei das erste und zweite Bild ($IR_1$ $IR_2$) bereits codierte, dann decodierte Referenzbilder sind, die zu einer Ansicht gehören, die sich von der Ansicht unterscheidet, zu welcher das aktuelle Bild gehört, wobei das dritte Bild ($IR_3$) ein bereits codiertes, dann decodiertes Referenzbild ist, das zur selben Ansicht wie das aktuelle Bild gehört.

5.  Computerprogramm aufweisend Programmcode-Anweisungen für die Ausführung der Schritte des Codierungsverfahrens nach einem der Ansprüche 1 bis 3, wenn das Programm auf einem Computer ausgeführt wird.

6.  Verfahren zur Decodierung eines Datenstroms, der für ein aktuelles codiertes Bild (lc) repräsentativ ist, wobei das aktuelle Bild (lc) eine aktuelle Ansicht ($V_{w,i}$) ist, die sich zum aktuellen Zeitpunkt (ti) in einem aktuellen Mehrfachansichtsbild ($IMV_i$) befindet, wobei das Verfahren die Vorrichtung, das Verfahren einen Schritt (D3) des Bestimmens, in einem ersten Bild ($IR_1$), das sich vom aktuellen Bild unterscheidet, einer Gruppe von k Pixeln umfasst, die einer aktuellen Gruppe von k zu decodierenden Pixeln des aktuellen Bilds (lc) entspricht, wobei das Decodierungsverfahren **dadurch gekennzeichnet ist, dass** es die folgenden Schritte umfasst:

    - Berechnen (D4) von k Bewegungsvektoren zwischen jedem der k Pixel des ersten Bilds ($IR_1$) und einem entsprechenden Pixel eines zweiten Bilds ($IR_2$), das sich vom aktuellen Bild unterscheidet, an dessen Ende ein Feld aus k Bewegungsvektoren erhalten ist,
    - inverses Vorhersagen (D5) der Pixel der aktuellen Gruppe von k Pixeln des aktuellen Bilds (lc) ausgehend vom erhaltenen Feld aus k Bewegungsvektoren, wobei der Schritt des Vorhersagens darin besteht, die k Pixel der aktuellen Gruppe von Pixeln durch entsprechende Pixel eines dritten Bilds ($IR_3$) vorherzusagen, das sich vom aktuellen Bild (lc) unterscheidet, wobei von den k Bewegungsvektoren des erhaltenen Felds aus Bewegungsvektoren jeweils auf die entsprechenden Pixel verwiesen wird,
    wobei die ersten und zweiten Bilder ($IR_1$, $IR_2$) bereits codierte, dann decodierte Referenzbilder sind, die zu einer Ansicht gehören, die sich von der Ansicht unterscheidet, zu welcher das aktuelle Bild gehört, wobei das dritte Bild ($IR_3$) ein bereits codiertes, dann decodiertes Referenzbild ist, das zur selben Ansicht wie das aktuelle Bild gehört.

7.  Decodierungsverfahren nach Anspruch 6, wobei der Schritt des inversen Vorhersagens darin besteht:

    - im Datenstrom eine aktuelle Restgruppe von Pixeln zu bestimmen (D1, D2), die der aktuellen Gruppe von k Pixeln zugeordnet ist,
    - die k Pixel der aktuellen Gruppe von Pixeln ausgehend von der bestimmten aktuellen Restgruppe von Pixeln (GPr$_C$) zu rekonstruieren (D5$_1$a).

8. Decodierungsverfahren nach einem der Ansprüche 6 bis 7, wobei:

- der Schritt des Berechnens darin besteht, eine Mehrzahl von Feldern aus Bewegungsvektoren zwischen einerseits Pixeln einer Mehrzahl von ersten Bildern und andererseits entsprechenden Pixeln in einer Mehrzahl von zweiten Bildern, die sich vom aktuellen Bild unterscheiden, zu berechnen, wobei das Verfahren ferner einen Schritt des Auswählens eines Felds aus Bewegungsvektoren aus den Feldern aus berechneten Bewegungsvektoren mittels einer mathematischen oder statistischen Funktion umfasst,
- wobei der Schritt des inversen Vorhersagens darin besteht, die Pixel der aktuellen Gruppe von Pixeln ausgehend vom ausgewählten Feld aus Bewegungsvektoren vorherzusagen.

9. Vorrichtung (DO) zur Decodierung eines Datenstroms, der für ein aktuelles Bild (lc) repräsentativ ist, wobei das aktuelle Bild (lc) eine aktuelle Ansicht (V$_{w,i}$) ist, die sich zum aktuellen Zeitpunkt (ti) in einem aktuellen Mehrfach-ansichtsbild (IMV$_i$) befindet, wobei das Verfahren die Vorrichtung, das Verfahren Mittel (CAL1_DO) zum Bestimmen, in einem ersten Bild (IR$_1$), das sich vom aktuellen Bild unterscheidet, einer Gruppe von k Pixeln umfasst, die einer aktuellen Gruppe von k zu decodierenden Pixeln des aktuellen Bilds (lc) entspricht, wobei die Vorrichtung geeignet ist, das Decodierungsverfahren nach einem der Ansprüche 6 bis 8 durchzuführen, **dadurch gekennzeichnet, dass** sie Folgendes umfasst:

- Mittel (CAL2_DO) zum Berechnen eines Bewegungsvektors zwischen jedem der k Pixel des ersten Bilds (IR$_1$) und einem entsprechenden Pixel eines zweiten Bilds (IR$_2$), das sich vom aktuellen Bild unterscheidet, um ein Feld aus k Bewegungsvektoren zu erhalten,
- Mittel (PRED_DO) zum inversen Vorhersagen der aktuellen Gruppe von k Pixeln des aktuellen Bilds (lc) ausgehend vom erhaltenen Feld aus k Bewegungsvektoren, wobei der Schritt des Vorhersagens darin besteht, die k Pixel der aktuellen Gruppe von Pixeln durch entsprechende Pixel eines dritten Bilds (IR$_3$) vorherzusagen, das sich vom aktuellen Bild (lc) unterscheidet, wobei von den k Bewegungsvektoren des erhaltenen Felds aus Bewegungsvektoren jeweils auf die entsprechenden Pixel verwiesen wird, wobei die ersten und zweiten Bilder (IR$_1$, IR$_2$) bereits codierte, dann decodierte Referenzbilder sind, die zu einer Ansicht gehören, die sich von der Ansicht unterscheidet, zu welcher das aktuelle Bild gehört, wobei das dritte Bild (IR$_3$) ein bereits codiertes, dann decodiertes Referenzbild ist, das zur selben Ansicht wie das aktuelle Bild gehört.

10. Computerprogramm aufweisend Programmcode-Anweisungen für die Ausführung der Schritte des Decodierungsverfahrens nach einem der Ansprüche 6 bis 8, wenn das Programm auf einem Computer ausgeführt wird.

**Claims**

1. Method for coding a current image (I$_C$), the current image (I$_C$) being a current view (V$_{w,i}$) situated at a current instant (ti) in a current multi-view image (IMV$_i$), the method comprising a step (C2) of determining, in a first image (IR$_1$) different from the current image, a group of k pixels corresponding to a current group of k pixels to be coded of the current image (I$_C$), said coding method being **characterized in that** it comprises the following steps:

- calculation (C3) of a motion vector between each of the k pixels of the first image (IR$_1$) and a corresponding pixel of a second image (IR$_2$) different from the current image, on completion of which a field of k motion vectors is obtained,
- prediction (C4) of the pixels of the current group of k pixels of said current image (I$_C$) on the basis of the field of k motion vectors which is obtained, said prediction step consisting in predicting the k pixels of said current group of pixels by corresponding pixels of a third image (IR$_3$) different from said current image (I$_C$), said corresponding pixels being pointed at respectively by the k motion vectors of said field of motion vectors which is obtained, the first and second images (IR$_1$, IR$_2$) being reference images which have already been coded and then decoded and which belong to a view different from the view to which the current image belongs, the third image (IR$_3$) being a reference image which has already been coded and then decoded and which belongs to the same view as the current image.

2. Coding method according to Claim 1, said coding method furthermore comprising the following steps:

- obtaining of a current residual group of pixels by calculating the difference between the current group of k pixels and the predictor group of pixels which is obtained on completion of the prediction step,
- formulation of a data stream containing the current residual group of pixels which is obtained.

3. Coding method according to either one of Claims 1 and 2, in which:

- said calculation step consists in calculating a plurality of fields of motion vectors between, on the one hand, pixels of a plurality of first images and, on the other hand, corresponding pixels in a plurality of second images different from the current image,
said method furthermore comprising a step of selecting a field of motion vectors from among the fields of motion vectors calculated, by means of a mathematical or statistical function,
- said prediction step consisting in predicting the motion or the pixels of the current group of pixels on the basis of the selected field of motion vectors.

4. Device (CO) for coding a current image ($I_C$), the current image ($I_C$) being a current view ($V_{w,i}$) situated at the current instant (ti) in a current multi-view image ($IMV_i$), the method the device comprising means (CAL1_CO) for determining, in a first image ($IR_1$) different from the current image, a group of k pixels corresponding to a current group of k pixels to be coded of the current image ($I_C$), said device being suitable for implementing the coding method according to any one of Claims 1 to 3, **characterized in that** it comprises:

- means (CAL2_CO) for calculating a motion vector between each of the k pixels of the first image ($IR_1$) and a corresponding pixel of a second image ($IR_2$) different from the current image, so as to obtain a field of k motion vectors,
- means (PRED_CO) for predicting the pixels of the current group of k pixels of said current image ($I_C$) on the basis of the field of k motion vectors which is obtained, said prediction step consisting in predicting the k pixels of said current group of pixels by corresponding pixels of a third image ($IR_3$) different from said current image ($I_C$), said corresponding pixels being pointed at respectively by the k motion vectors of said field of motion vectors which is obtained,
the first and second images ($IR_1$, $IR_2$) being reference images which have already been coded and then decoded and which belong to a view different from the view to which the current image belongs,
the third image ($IR_3$) being a reference image which has already been coded and then decoded and which belongs to the same view as the current image.

5. Computer program comprising program code instructions for the execution of the steps of the coding method according to any one of Claims 1 to 3, when said program is executed on a computer.

6. Method for decoding a data stream representative of a current coded image ($I_C$), the current image ($I_C$) being a current view ($V_{w,i}$) situated at the current instant (ti) in a current multi-view image ($IMV_i$), the method the device, the method comprising a step (D3) of determining, in a first image ($IR_1$) different from the current image, a group of k pixels corresponding to a current group of k pixels to be decoded of the current image ($I_C$),
said decoding method being **characterized in that** it comprises the following steps:

- calculation (D4) of k motion vectors between each of the k pixels of the first image ($IR_1$) and a corresponding pixel of a second image ($IR_2$) different from the current image, on completion of which a field of k motion vectors is obtained,
- inverse prediction (D5) of the pixels of the current group of k pixels of said current image ($I_C$) on the basis of the field of k motion vectors which is obtained, said prediction step consisting in predicting the k pixels of said current group of pixels by corresponding pixels of a third image ($IR_3$) different from said current image ($I_C$), said corresponding pixels being pointed at respectively by the k motion vectors of said field of motion vectors which is obtained,
the first and second images ($IR_1$, $IR_2$) being reference images which have already been coded and then decoded and which belong to a view different from the view to which the current image belongs,
the third image ($IR_3$) being a reference image which has already been coded and then decoded and which belongs to the same view as the current image.

7. Decoding method according to Claim 6, in which said inverse prediction step consists in:

- determining (D1, D2), in said data stream, a current residual group of pixels which is associated with the current group of k pixels,
- reconstructing (D5₁a)) the k pixels of said current group of pixels on the basis of said determined current residual group of pixels (GPr$_C$).

8.  Decoding method according to either one of Claims 6 and 7, in which:

    - said calculation step consists in calculating a plurality of fields of motion vectors between, on the one hand, pixels of a plurality of first images and, on the other hand, corresponding pixels in a plurality of second images different from the current image,
    said method furthermore comprising a step of selecting a field of motion vectors from among the fields of motion vectors calculated, by means of a mathematical or statistical function,
    - said inverse prediction step consisting in reconstructing the pixels of the current group of pixels on the basis of the selected field of motion vectors.

9.  Device (DO) for decoding a data stream representative of a current image (I$_C$), the current image (I$_C$) being a current view (V$_{w,i}$) situated at the current instant (ti) in a current multi-view image (IMV$_i$), the method the device, the method comprising means (CAL1_DO) for determining, in a first image (IR$_1$) different from the current image, a group of k pixels corresponding to a current group of k pixels to be decoded of the current image (I$_C$), said device being suitable for implementing the decoding method according to any one of Claims 6 to 8, **characterized in that** it comprises:

    - means (CAL2_DO) for calculating a motion vector between each of the k pixels of the first image (IR$_1$) and a corresponding pixel of a second image (IR$_2$) different from the current image, so as to obtain a field of k motion vectors,
    - means (PRED_DO) for inverse prediction of the current group of k pixels of said current image (I$_C$) on the basis of the field of k motion vectors which is obtained, said prediction step consisting in predicting the k pixels of said current group of pixels by corresponding pixels of a third image (IR$_3$) different from said current image (I$_C$), said corresponding pixels being pointed at respectively by the k motion vectors of said field of motion vectors which is obtained,
    the first and second images (IR$_1$, IR$_2$) being reference images which have already been coded and then decoded and which belong to a view different from the view to which the current image belongs,
    the third image (IR$_3$) being a reference image which has already been coded and then decoded and which belongs to the same view as the current image.

10. Computer program comprising program code instructions for the execution of the steps of the decoding method according to any one of Claims 6 to 8, when said program is executed on a computer.

L IMAGES

SI

$I_c$

PARTITION. $I_c$/GP$_1$, GP$_2$, ...,GP$_u$ ,..., GP$_S$  C1

$GP_c$

DETERMINATION DANS L'IMAGE IR$_1$ D'UN GROUPE GP$_R$ DE k' PIXELS
CORRESPONDANT AU GROUPE GP$_c$ DE k PIXELS COURANT  C2

CALCUL CHAMP $C_c$ DE k' VECTEURS DE MOUVEMENT ENTRE
k' PIXELS DE L'IMAGE IR$_1$ ET n PIXELS D'UNE IMAGE IR$_2$ (n ⩽ k')  C3

$C_c$  C4

PREDICTION GROUPE GP$_c$ DE K PIXELS COURANT

A PARTIR DU CHAMP DE VECTEURS DE MOUVEMENT $C_c$

C4b)

PREDICTION GP$_c$ /k' VECTEURS

DU MOUVEMENT DU CHAMP $C_c$

C4a)

| k PIXELS GROUPE GP$_c$ | k VECTEURS DE MOUVEMENT GROUPE GP$_c$ |

C4$_1$a)  C4$_2$a)

PREDICTION DE MOUVEMENT

DE GP$_c$ /1 VECTEUR

DE MOUVEMENT DU CHAMP $C^c$

SELECT. VECTEUR DU CHAMP $C_c$ /Fonction math. ou stat.

C4$_1$b)  C4$_2$b)

PREDICT. MOUVEMENT DE GP$_c$ AVEC MV$_{sel}$

C5  $GPp_c$  $Cp_c$  C5b)  $MVp_c$

| GP$_c$ - GPp$_c$ | $C_c$ - Cp$_c$ | MV$_c$ - MVp$_c$ |

C5$_1$a)  C5$_2$a)

C6  $GPr_c$  $Cr_c$  $MVr_c$

ENCOD.

F

1 ⩽ u ⩽ S

**Fig. 1**

Fig.2

**Fig. 3**

EP 3 050 298 B1

F : GP$_1$,GP$_2$,...,GP$_u$,...,GP$_S$

**D1**

| SELECTION DONNEES RESIDUELLES ASSOCIEES AU GROUPE DE k PIXELS GP$_c$ |

**D2**

| DECOD. ENTROPIQUE |

GPr$_c$ OU Cr$_c$ OU MVr$_c$

| DETERMINATION DANS IMAGE IR$_1$ D'UN GROUPE GP$_R$ DE k' PIXELS CORRESPONDANT AU GROUPE GP$_c$ DE k PIXELS COURANT |

**D3**

| CALCUL CHAMP C$_c$ DE k' VECTEURS DE MOUVEMENT ENTRE k' PIXELS DE L'IMAGE IR$_1$ ET n PIXELS D'UNE IMAGE IR$_2$ (n ≤ k') |

**D4**

C$_c$

**D5**

1 ≤ u ≤ S

PREDICTION INVERSE GROUPE GP$_c$ DE k PIXELS COURANT

A PARTIR DU CHAMP DE VECTEURS DE MOUVEMENT C$_c$

**D5b)**

**D5a)**

PREDICTION INVERSE GP$_c$ /k' VECTEURS

DE MOUVEMENT DU CHAMP C$_c$

| k PIXELS GROUPE GP$_c$ | k VECTEURS DE MOUVEMENT GROUPE GP$_c$ |

**D5$_1$a)**    **D5$_2$a)**

PREDICTION INVERSE GP$_c$ /1 VECTEUR

DE MOUVEMENT DU CHAMP C$_c$

| SELECT. VECTEUR DU CHAMP C$_c$ /Fonction math. ou stat. |

**D5$_1$b)**    MV$_{sel}$    **D5$_2$b)**

| PRED.INV. MOUVEMENT DE GP$_c$ AVEC MV$_{sel}$ |

GPD$_c$

**D6**

| RECONSTRUCTION IMAGE I$_c$ |

ID$_c$

# Fig. 4

Fig. 5A

**Fig. 5B**

EP 3 050 298 B1

$IMV_{i-1}$

$IMV_i$

$t_{i-1}$

$t_i$

$IR_2 = V_{w-1,i-1}$

$IR_1 = V_{w-1,i}$

$P_{2,4}$ $P_{2,3}$ $P_{2,2}$ $P_{2,5}$ $P_{2,1}$ $P_{2,9}$

$P_{2,6}$

$P_{2,7}$

$P_{2,8}$ $P_{2,10}$ $P_{2,11}$

$P_{2,12}$ $P_{2,13}$

$P_{2,14}$

$P_{2,15}$

$P_{2,16}$

$C_c$

$GP_R$

$DV$

$P_{3,4}$ $P_{3,3}$ $P_{3,2}$ $P_{3,1}$ $P_{3,11}$ $P_{3,9}$

$P_{3,5}$

$P_{3,7}$

$IR_3 = V_{w,i-1}$

$I_c = V_{w,i}$

$P_{3,6}$ $P_{3,8}$

$P_{3,10}$

$C_c$

$GP_c$

$P_{3,12}$

$P_{3,13}$

$P_{3,14}$

$P_{3,16}$

$P_{3,15}$

**Fig. 5C**

Fig. 5D

EP 3 050 298 B1

**Fig. 5E**

**Fig. 5F**

**Fig. 5G**

IMV$_i$

$t_i$    $\vdots$    IR$_1$=V$_{w-1,i}$

DVF

I$_c$=V$_{w,i}$

# Fig. 5H

GP$_c$

IMV$_i$

$t_i$

IR$_1$

CT$_{1,i}$    CP$_{1,i}$

DVF    DV    GP$_R$

I$_c$=CT$_{c,i}$

GP$_c$

# Fig. 5I

Fig. 5J

Fig. 5K

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012096164 A1

**Littérature non-brevet citée dans la description**

- **G.J. SULLIVAN ; T.WIEGAND.** Rate-distortion optimization for video compression. *IEEE Signal Proc. Mag.,* 1998, 74-90